(19) Europäisches Patentamt
European Patent Office
Office européen des brevets

(11) **EP 1 505 632 B1**

(12) **EUROPEAN PATENT SPECIFICATION**

(45) Date of publication and mention
of the grant of the patent:
**12.01.2011 Bulletin 2011/02**

(51) Int Cl.:
*H01J 49/06* (2006.01)     *H01J 49/42* (2006.01)

(21) Application number: **04025001.1**

(22) Date of filing: **30.05.2003**

(54) **Mass spectrometer**

Massenspektrometer

Spectromètre de masse

(84) Designated Contracting States:
**AT BE BG CH CY CZ DE DK EE ES FI FR GR HU
IE IT LI LU MC NL PT RO SE SI SK TR**

(30) Priority: **30.05.2002 GB 0212508
11.04.2003 GB 0308417**

(43) Date of publication of application:
**09.02.2005 Bulletin 2005/06**

(62) Document number(s) of the earlier application(s) in
accordance with Art. 76 EPC:
**03253410.9 / 1 378 930**

(73) Proprietor: **Micromass UK Limited
Manchester M22 5PP (GB)**

(72) Inventors:
• **Bateman, Robert Harold
Cheshire WA16 8NP (GB)**
• **Giles, Kevin
Stockport
Cheshire SK6 5DW (GB)**
• **Pringle, Steve
Darwen BB3 3PS (GB)**

(74) Representative: **Jeffrey, Philip Michael
Dehns
St Bride's House
10 Salisbury Square
London
EC4Y 8JD (GB)**

(56) References cited:
EP-A- 1 006 559     WO-A-97/49111
US-A- 5 140 158     US-A- 5 206 506

**Description**

The present invention relates to a mass spectrometer and to a method of mass spectrometry.

Radio Frequency (RF) ion guides are commonly used for confining and transporting ions and comprise an arrangement of electrodes wherein an RF voltage is applied between neighbouring electrodes so that a pseudo-potential well or valley is provided. The pseudo-potential well can be arranged to confine ions and may be used to transport ions by acting as an ion guide. Its use as an ion guide is well known and can be very efficient.

Known RF ion guides can still function efficiently as an ion guide even at relatively high pressures where ions are likely to undergo frequent collisions with residual gas molecules. The collisions with gas molecules may cause ions to scatter and lose energy but the pseudo-potential well generated by the RF ion guide acts to radially confine the ions within the ion guide. In this respect the known RF ion guide has an advantage over guide wire types of ion guides where a DC voltage is applied to a central wire running down the centre of a conducting tube and wherein ions are held in orbit around the central guide wire. If ions undergo many collisions with gas molecules in a guide wire type of ion guide then they will lose energy and will eventually collapse into the central guide wire and be lost.

US 5206506 discloses an ion processing unit comprising a series of perforated electrode sheets through which effective potential wells may be transmitted.

It is desired to provide an improved ion guide for a mass spectrometer and an improved method of mass spectrometry.

According to an aspect of the present invention there is provided a mass spectrometer as claimed in claim 1.

The mass to charge ratio selective ion trap may comprise a 2D (linear) quadrupole ion trap, a 3D (Paul) quadrupole ion trap or a Penning ion trap.

Preferably, at least a majority of the ions trapped within the first trapping region have substantially the same mass to charge ratio and/or at least a majority of the ions trapped within the second trapping region have substantially the same mass to charge ratio.

Preferably, at least a majority of the ions trapped within the first trapping region have mass to charge ratios which differ by less than $x$ mass to charge ratio units and/or at least a majority of the ions trapped within the second trapping region have mass to charge ratios which differ by less than $x$ mass to charge ratio units, wherein $x$ is selected from the group consisting of: (i) 500; (ii) 450; (iii) 400; (iv) 350; (v) 300; (vi) 250; (vii) 200; (viii) 150; (ix) 100; (x) 90; (xi) 80; (xii) 70; (xiii) 60; (xiv) 50; (xv) 40; (xvi) 30; (xvii) 20; (xviii) 10; and (xix) 5.

At least a majority of the ions trapped within the first trapping region and/or at least a majority of the ions trapped within the second trapping region may have mass to charge ratios which differ by less than: (i) 30%; (ii) 25%; (iii) 20%; (iv) 15%; (v) 10%; (vi) 5%; (vii) 4%; (viii) 3%; (ix) 2%; or (x) 1%.

An axial voltage gradient may be maintained along at least a portion of the length of the ion guide and the axial voltage gradient preferably varies with time whilst ions are being transmitted through the ion guide.

The ion guide preferably comprises a first electrode held at a first reference potential, a second electrode held at a second reference potential, and a third electrode held at a third reference potential, wherein:

at a first time $t_1$ a first DC voltage is supplied to the first electrode so that the first electrode is held at a first potential above or below the first reference potential;
at a second later time $t_2$ a second DC voltage is supplied to the second electrode so that the second electrode is held at a second potential above or below the second reference potential; and
at a third later time $t_3$ a third DC voltage is supplied to the third electrode so that the third electrode is held at a third potential above or below the third reference potential.

According to one embodiment, at the first time $t_1$ the second electrode is at the second reference potential and the third electrode is at the third reference potential;
at the second time $t_2$ the first electrode is at the first potential and the third electrode is at the third reference potential; and
at the third time $t_3$ the first electrode is at the first potential and the second electrode is at the second potential.

According to another embodiment at the first time $t_1$ the second electrode is at the second reference potential and the third electrode is at the third reference potential;
at the second time $t_2$ the first electrode is no longer supplied with the first DC voltage so that the first electrode is returned to the first reference potential and the third electrode is at the third reference potential; and
at the third time $t_3$ the first electrode is at the first reference potential and the second electrode is no longer supplied with the second DC voltage so that the second electrode is returned to the second reference potential.

Preferably, the first, second and third reference potentials are substantially the same. The first, second and third DC voltages are also preferably substantially the same. Preferably, the first, second and third potentials are substantially the same.

According to an embodiment the ion guide comprises 3, 4, 5, 6, 7, 8, 9, 10, 11, 12, 13, 14, 15, 16, 17, 18, 19, 20, 21, 22, 23, 24, 25, 26, 27, 28, 29, 30 or >30 segments, wherein each segment comprises 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 or >30 electrodes and wherein the electrodes in a segment are maintained at substantially the same DC potential. Preferably, a plurality of segments are maintained at substantially the same DC potential. Preferably, each segment is maintained at substantially the same DC potential as the subsequent nth segment wherein n is 3, 4, 5, 6, 7, 8, 9, 10, 11, 12, 13, 14, 15, 16, 17, 18, 19, 20, 21, 22, 23, 24, 25, 26, 27, 28, 29, 30 or >30.

Ions are preferably confined radially within the ion guide by an AC or RF electric field. Ions are preferably radially confined within the ion guide in a pseudo-potential well and are constrained axially by a real potential barrier or well.

The transit time of ions through the ion guide is selected from the group consisting of: (i) less than or equal to 20 ms; (ii) less than or equal to 10 ms; (iii) less than or equal to 5 ms; (iv) less than or equal to 1 ms; and (v) less than or equal to 0.5 ms.

The ion guide is preferably maintained, in use, at a pressure selected from the group consisting of: (i) greater than or equal to 0.0001 mbar; (ii) greater than or equal to 0.0005 mbar; (iii) greater than or equal to 0.001 mbar; (iv) greater than or equal to 0.005 mbar; (v) greater than or equal to 0.01 mbar; (vi) greater than or equal to 0.05 mbar; (vii) greater than or equal to 0.1 mbar; (viii) greater than or equal to 0.5 mbar; (ix) greater than or equal to 1 mbar; (x) greater than or equal to 5 mbar; and (xi) greater than or equal to 10 mbar.

The ion guide is preferably maintained, in use, at a pressure selected from the group consisting of: (i) less than or equal to 10 mbar; (ii) less than or equal to 5 mbar; (iii) less than or equal to 1 mbar; (iv) less than or equal to 0.5 mbar; (v) less than or equal to 0.1 mbar; (vi) less than or equal to 0.05 mbar; (vii) less than or equal to 0.01 mbar; (viii) less than or equal to 0.005 mbar; (ix) less than or equal to 0.001 mbar; (x) less than or equal to 0.0005 mbar; and (xi) less than or equal to 0.0001 mbar.

The ion guide is preferably maintained, in use, at a pressure selected from the group consisting of: (i) between 0.0001 and 10 mbar; (ii) between 0.0001 and 1 mbar; (iii) between 0.0001 and 0.1 mbar; (iv) between 0.0001 and 0.01 mbar; (v) between 0.0001 and 0.001 mbar; (vi) between 0.001 and 10 mbar; (vii) between 0.001 and 1 mbar; (viii) between 0.001 and 0.1 mbar; (ix) between 0.001 and 0.01 mbar; (x) between 0.01 and 10 mbar; (xi) between 0.01 and 1 mbar; (xii) between 0.01 and 0.1 mbar; (xiii) between 0.1 and 10 mbar; (xiv) between 0.1 and 1 mbar; and (xv) between 1 and 10 mbar.

The ion guide is preferably maintained, in use, at a pressure such that a viscous drag is imposed upon ions passing through the ion guide.

According to the preferred embodiment one or more transient DC voltages or one or more transient DC voltage waveforms are initially provided at a first axial position and are then subsequently provided at second, then third different axial positions along the ion guide.

One or more transient DC voltages or one or more transient DC voltage waveforms preferably move in use from one end of the ion guide to another end of the ion guide so that ions are urged along the ion guide.

The one or more transient DC voltages preferably create: (i) a potential hill or barrier; (ii) a potential well; (iii) multiple potential hills or barriers; (iv) multiple potential wells; (v) a combination of a potential hill or barrier and a potential well; or (vi) a combination of multiple potential hills or barriers and multiple potential wells.

The one or more transient DC voltage waveforms preferably comprise a repeating waveform such as a square wave.

The amplitude of the one or more transient DC voltages or the one or more transient DC voltage waveforms may remain substantially constant with time. Alternatively, the amplitude of the one or more transient DC voltages or the one or more transient DC voltage waveforms may vary with time. The amplitude of the one or more transient DC voltages or the one or more transient DC voltage waveforms may either: (i) increases with time; (ii) increases then decreases with time; (iii) decreases with time; or (iv) decreases then increases with time.

According to an embodiment the ion guide comprises an upstream entrance region, a downstream exit region and an intermediate region, wherein:

in the entrance region the amplitude of the one or more transient DC voltages or the one or more transient DC voltage waveforms has a first amplitude;
in the intermediate region the amplitude of the one or more transient DC voltages or the one or more transient DC voltage waveforms has a second amplitude; and
in the exit region the amplitude of the one or more transient DC voltages or the one or more transient DC voltage waveforms has a third amplitude.

The entrance and/or exit region preferably comprise a proportion of the total axial length of the ion guide selected from the group consisting of: (i) < 5%; (ii) 5-10%; (iii) 10-15%; (iv) 15-20%; (v) 20-25%; (vi) 25-30%; (vii) 30-35%; (viii) 35-40%; and (ix) 40-45%.

The first and/or third amplitudes are preferably substantially zero and the second amplitude is preferably substantially non-zero.

The second amplitude is preferably larger than the first amplitude and/or the second amplitude is preferably larger than the third amplitude.

One or more transient DC voltages or one or more transient DC voltage waveforms preferably pass in use along the ion guide with a first velocity. The first velocity preferably: (i) remains substantially constant; (ii) varies; (iii) increases; (iv) increases then decreases; (v) decreases; (vi) decreases then increases; (vii) reduces to substantially zero; (viii) reverses direction; or (ix) reduces to substantially zero and then reverses direction.

The one or more transient DC voltages or the one or more transient DC voltage waveforms preferably cause ions within the ion guide to pass along the ion guide with a second velocity.

The difference between the first velocity and the second velocity is preferably less than or equal to 100 m/s, 90 m/s, 80 m/s, 70 m/s, 60 m/s, 50 m/s, 40 m/s, 30 m/s, 20 m/s, 10 m/s, 5 m/s or 1 m/s.

The first velocity is preferably selected from the group consisting of: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s; and (xii) 2750-3000 m/s.

The second velocity is preferably selected from the group consisting of: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s; and (xii) 2750-3000 m/s.

According to the preferred embodiment the second velocity is substantially the same as the first velocity.

The one or more transient DC voltages or the one or more transient DC voltage waveforms preferably have a frequency, and wherein the frequency: (i) remains substantially constant; (ii) varies; (iii) increases; (iv) increases then decreases; (v) decreases; or (vi) decreases then increases.

The one or more transient DC voltages or the one or more transient DC voltage waveforms preferably have a wavelength, and wherein the wavelength: (i) remains substantially constant; (ii) varies; (iii) increases; (iv) increases then decreases; (v) decreases; or (vi) decreases then increases.

According to an embodiment two or more transient DC voltages or two or more transient DC voltage waveforms are arranged to move: (i) in the same direction; (ii) in opposite directions; (iii) towards each other; or (iv) away from each other.

The one or more transient DC voltages or the one or more transient DC voltage waveforms are preferably repeatedly generated and passed in use along the ion guide, and wherein the frequency of generating the one or more transient DC voltages or the one or more transient DC voltage waveforms: (i) remains substantially constant; (ii) varies; (iii) increases; (iv) increases then decreases; (v) decreases; or (vi) decreases then increases.

Preferably, the one or more transient DC voltages or the one or more transient DC voltage waveforms has a wavelength which remains substantially the same and a frequency which decreases with time so that the velocity of the one or more transient DC voltages or the one or more transient DC voltages decreases with time.

Pulses of ions preferably emerge from an exit of the ion guide.

The mass spectrometer preferably further comprises an ion detector, the ion detector being arranged to be substantially phase locked in use with the pulses of ions emerging from the exit of the ion guide.

The mass spectrometer preferably further comprises a Time of Flight mass analyser comprising an electrode for injecting ions into a drift region, the electrode being arranged to be energised in use in a substantially synchronised manner with the pulses of ions emerging from the exit of the ion guide.

Preferably, the mass spectrometer further comprises an ion trap arranged downstream of the ion guide, the ion trap being arranged to store and/or release ions from the ion trap in a substantially synchronised manner with the pulses of ions emerging from the exit of the ion guide. The mass spectrometer may also comprise an mass filter arranged downstream of the ion guide, wherein a mass to charge ratio transmission window of the mass filter is varied in a substantially synchronised manner with the pulses of ions emerging from the exit of the ion guide.

The ion guide may comprise an ion funnel comprising a plurality of electrodes having apertures therein through which ions are transmitted, wherein the diameter of the apertures becomes progressively smaller or larger. Alternatively, the ion guide may comprise an ion tunnel comprising a plurality of electrodes having apertures therein through which ions are transmitted, wherein the diameter of the apertures remains substantially constant. The ion guide may comprise a stack of plate, ring or wire loop electrodes.

The ion guide preferably comprises a plurality of electrodes, each electrode having an aperture through which ions are transmitted in use. Each electrode preferably has a substantially circular aperture. Preferably, each electrode has a single aperture through which ions are transmitted in use.

The diameter of the apertures of at least 50%, 60%, 70%, 80%, 90% or 95% of the electrodes forming the ion guide is preferably selected from the group consisting of: (i) less than or equal to 10 mm; (ii) less than or equal to 9 mm; (iii) less than or equal to 8 mm; (iv) less than or equal to 7 mm; (v) less than or equal to 6 mm; (vi) less than or equal to 5 mm; (vii) less than or equal to 4 mm; (viii) less than or equal to 3 mm; (ix) less than or equal to 2 mm; and (x) less than or equal to 1 mm.

Preferably, at least 50%, 60%, 70%, 80%, 90% or 95% of the electrodes forming the ion guide have apertures which are substantially the same size or area.

According to a less preferred embodiment the ion guide may comprise a segmented rod set.

The ion guide may consist of: (i) 10-20 electrodes; (ii) 20-30 electrodes; (iii) 30-40 electrodes; (iv) 40-50 electrodes; (v) 50-60 electrodes; (vi) 60-70 electrodes; (vii) 70-80 electrodes; (viii) 80-90 electrodes; (ix) 90-100 electrodes; (x) 100-110 electrodes; (xi) 110-120 electrodes; (xii) 120-130 electrodes; (xiii) 130-140 electrodes; (xiv) 140-150 electrodes; or (xv) more than 150 electrodes.

The thickness of at least 50%, 60%, 70%, 80%, 90% or 95% of the electrodes may be selected from the group consisting of: (i) less than or equal to 3 mm; (ii) less than or equal to 2.5 mm; (iii) less than or equal to 2.0 mm; (iv) less than or equal to 1.5 mm; (v) less than or equal to 1.0 mm; and (vi) less than or equal to 0.5 mm.

The ion guide preferably has a length selected from the group consisting of: (i) less than 5 cm; (ii) 5-10 cm; (iii) 10-15 cm; (iv) 15-20 cm; (v) 20-25 cm; (vi) 25-30 cm; and (vii) greater than 30 cm.

Preferably, at least 10%, 20%, 30%, 40%, 50%, 60%, 70%, 80%, 90%, or 95% of the electrodes are connected to both a DC and an AC or RF voltage supply. Preferably, axially adjacent electrodes are supplied with AC or RF voltages having a phase difference of 180°.

The mass spectrometer preferably further comprises an ion source selected from the group consisting of: (i) Electrospray ("ESI") ion source; (ii) Atmospheric Pressure Chemical Ionisation ("APCI") ion source; (iii) Atmospheric Pressure Photo Ionisation ("APPI") ion source; (iv) Matrix Assisted Laser Desorption Ionisation ("MALDI") ion source; (v) Laser Desorption Ionisation ("LDI") ion source; (vi) Inductively Coupled Plasma ("ICP") ion source; (vii) Electron Impact ("EI") ion source; (viii) Chemical Ionisation ("CI") ion source; (ix) a Fast Atom Bombardment ("FAB") ion source; and (x) a Liquid Secondary Ions Mass Spectrometry ("LSIMS") ion source.

The ion source may comprise a continuous ion source or a pulsed ion source.

According to the preferred embodiment ions exiting the ion guide are arranged to have substantially constant energy substantially independent of their mass to charge ratio.

Preferably, a DC potential waveform is applied to the electrodes and wherein the velocity of the DC potential waveform becomes progressively slower. The ions in a pulse of ions emitted from the ion guide preferably have substantially the same energy or similar energies. Preferably, the ions from a plurality of pulses of ions emitted from the ion guide have substantially the same energy or similar energies.

A mass analyser is preferably provided to mass analyse the ions exiting the ion guide. The ions exiting the ion guide are preferably accelerated through a constant voltage difference prior to mass analysing the ions. The ions are preferably mass analysed by an orthogonal acceleration Time of Flight mass analyser. An electrode of the orthogonal acceleration Time of Flight mass analyser is preferably energised after a delay time after ions are released from the ion guide. The delay time is preferably progressively increased, decreased or varied. The delay time may be increased or decreased substantially linearly, in a regular manner or according to a predetermined manner.

According to another aspect of the present invention there is provided a method of mass spectrometry as claimed in claim 76.

According to an arrangement which does not form part of the present invention, but which is described for illustrative purposes, a pulse of ions may be emitted from a pulsed ion source or released from an ion trap and then accelerated so that substantially all the ions have substantially the same energy. The ions may then be allowed to pass through a field free drift region which is maintained at a relatively low pressure so that ions of different mass to charge ratios will travel through the drift region with different velocities. Accordingly, ions having a relatively low mass to charge ratio will travel faster than ions having relatively higher mass to charge ratios and hence will reach the end of the drift region before other ions. Ions will therefore become temporally dispersed according to their mass to charge ratio. Similarly, if ions enter a drift region maintained at a relatively high pressure with an axial electric field to urge ions through the drift region then the ions will become temporally dispersed according to their ion mobility.

An advantage of this arrangement is that once ions have been dispersed according to a physico-chemical property such as ion mobility or mass to charge ratio, then ions having substantially the same or similar physico-chemical properties can be trapped and stored within the same trapping region within the ion guide. The trapping regions are then translated along the ion guide so that the next fraction of ions arriving at the ion guide is received within the next trapping region.

The preferred arrangement allows ions having substantially similar properties to be ejected from the ion guide at substantially the same time. This is particularly useful and enables, for example, the delay time of a pusher/puller electrode of a Time of Flight mass analyser downstream of the ion guide to be set so that substantially all the ions released from the ion guide in a packet of ions are then orthogonally accelerated into the drift region of the mass analyser.

According to one arrangement, as groups of ions having larger mass to charge ratios become trapped within separate trapping regions within the ion guide, then the trapping regions towards the exit of the ion guide will contain ions having relatively lower mass to charge ratios whereas the trapping regions towards the entrance of the ion guide will contain ions having relatively higher mass to charge ratios. Each packet of ions released from the exit of the ion guide will therefore have an average mass to charge ratio which is slightly higher than that of a preceding package of ions released from the ion guide.

The preferred arrangement is particularly useful when a discontinuous mass analyser such as a quadrupole ion trap, FTICR mass analyser or Time of Flight mass analyser is used. Discontinuous mass analysers operate by receiving a packet of ions which have been accelerated to a given energy. However, this causes ions with different mass to charge ratios to travel with different velocities to the mass analyser. Accordingly, if the packet of ions being passed to the mass analyser has a wide.range of mass to charge ratios then different ions will arrive at the mass analyser at different times. In some circumstances this makes it difficult or even impossible to analyse all the different ions and hence this can result in a relatively low duty cycle and accordingly low sensitivity. For example, if the mass analyser is an orthogonal acceleration Time of Flight mass analyser then only ions in the acceleration region at the time of the acceleration pulse will be accelerated into the Time of Flight analyser and the other ions arriving at the pusher electrode before or after the acceleration pulse will be lost.

A particular advantage of the preferred arrangement is that it can be ensured that only ions with a relatively narrow range of mass to charge ratios exit the ion guide at any given time. This allows the delay time of the orthogonal acceleration pulse to be effectively synchronised with the arrival of those ions at the acceleration region. In this way the sampling duty cycle for these ions can be as high as 100% and hence the sensitivity of the mass spectrometer can be very high.

The next packet of ions to be released from the ion guide will also preferably have a narrow spread of mass to charge ratios. The average mass to charge ratio of the ions in this packet will be slightly higher than the previous packet of ions and hence the delay time of the orthogonal acceleration pulse can be substantially synchronised with the arrival of those ions at the acceleration region.

The separation of ions according to mass to charge ratio before arrival at the preferred ion guide may take place in a field free region and/or in an ion guide. If an ion guide is used then the ion guide is preferably an RF ion guide. However, according to less preferred arrangements other types of ion guides such as guide wire ion guides may be used.

According to a preferred arrangement ions may be generated from a pulsed ion source e.g. a laser ablation or MALDI ion source or alternatively the ions may be released in a pulse from an ion trap. Ions then preferably travel through a field free flight tube to the preferred ion guide which is provided with a plurality of trapping regions which are translated along the length of the ion guide. The trapping regions may be created by applying transient DC voltages to certain electrodes so that potential wells are formed between these electrodes. The transient DC voltages are then progressively applied to subsequent electrodes so that the trapping regions move along the ion guide which may be referred to hereinafter as a "travelling wave ion guide".

The ions once released from the ion guide may then be passed through a second field free flight tube to an orthogonal acceleration Time of Flight mass analyser. The field free flight tubes are preferably maintained at relatively low pressures e.g. < 0.0001 mbar whereas the ion guide with multiple trapping regions is preferably maintained at an intermediate pressure e.g. between 0.001 and 10 mbar.

In the following the distance in meters from the pulsed ion source or ion trap to the entrance of the travelling wave ion guide is $L_1$, the length of the travelling wave ion guide is $L_2$ and the distance from the exit of the travelling wave ion guide to the centre of an orthogonal acceleration Time of Flight acceleration region is $L_3$. The

ions are preferably accelerated through a voltage difference of $V_1$ at the ion source or ion trap so that they have energy $E_1$ of $zeV_1$ electron volts. Accordingly, for ions having a mass m the arrival time $T_1$ (in $\mu$s) of ions at the entrance to the travelling wave ion guide after they have been ejected from the ion source or emitted from an upstream ion trap is given by:

$$T_1 = 72 L_1 \sqrt{\frac{m}{zeV_1}}$$

The velocity v of these ions will be:

$$v = \frac{L_1}{T_1}$$

The travelling wave ion guide is preferably maintained at a pressure between 0.0001 and 100 mbar, further preferably between 0.001 and 10 mbar. At these pressures the gas density is sufficient to impose a viscous drag on the ions and hence the gas will appear as a viscous medium to the ions and will act to slow the ions.

It is preferably arranged that the velocity $V_{wave}$ of one or more transient DC voltages or one or more transient DC voltage waveforms progressively applied to the electrodes forming the ion guide is equal to the velocity v of the ions as they arrive at the entrance to the travelling wave ion guide. Since the velocity of the ions arriving at the entrance to the ion guide is inversely proportional to elapsed time $T_1$ from release of ions from the ion source or ion trap, then the velocity $V_{wave}$ of the travelling wave is preferably arranged to decrease with time in a similar manner.

Since the travelling wave velocity $V_{wave}$ is equal to $\lambda/T$ where $\lambda$ is the wavelength and T is the cycle time of the travelling DC waveform, then it follows that the cycle time T should vary in proportion to the elapsed time $T_1$. In other words, for the travelling wave velocity to always equal the velocity of the ions arriving at the entrance to the preferred ion guide, the wave cycle time T should preferably increase linearly with time.

Since the travelling DC wave velocity $V_{wave}$ preferably continuously slows, it could be considered that the ions might travel on ahead of the travelling DC wave. However, the viscous drag resulting from frequent collisions with gas molecules prevents the ions from building up excessive velocity. Consequently, the ions tend to ride on the travelling DC wave rather than run ahead of the travelling DC wave and execute excessive oscillations within the travelling potential wells.

If, in time $\delta t$, the ions travel distance $\delta l$ within the ion guide:

$$\delta l = v \, \delta t$$

then if the time at which the ions exit the travelling wave ion guide is $T_2$ then the distance $\Delta L$ travelled within the ion guide is:

$$\Delta L = \int_{T_1}^{T_2} v \, \delta t$$

$$\Delta L = \int_{T_1}^{T_2} \frac{L_1}{t} \, \delta t$$

$$\Delta L = L_1 \left( \ln(T_2) - \ln(T_1) \right)$$

$$\Delta L = L_1 \ln\left( \frac{T_2}{T_1} \right)$$

Since the length of the ion guide is $L_2$ and hence $\Delta L = L_2$ then:

$$L_2 = L_1 \ln\left( \frac{T_2}{T_1} \right)$$

$$T_2 = T_1 \, e^{\left( \frac{L_2}{L_1} \right)}$$

Hence, the velocity of the ions $V_x$ as they exit the travelling wave ion guide is equal to that of the travelling DC wave at the time of exit and therefore is:

$$v_x = \frac{L_1}{T_2}$$

$$v_x = \frac{L_1}{T_1} e^{-\left( \frac{L_2}{L_1} \right)}$$

$$v_x = v e^{-\left( \frac{L_2}{L_1} \right)}$$

Since the energy $E_1$ of the ions at the entrance to the ion guide is:

$$E_1 = zeV_1$$

then since:

$$E = \frac{1}{2} mv^2$$

if the energy of the ions at the exit of the travelling wave ion guide is $E_2$ then:

$$E_2 = \frac{1}{2} m v_x^{\,2}$$

$$E_2 = \frac{1}{2} m v^2 e^{-2\left( \frac{L_2}{L_1} \right)}$$

$$E_2 = E_1 e^{-2\left( \frac{L_2}{L_1} \right)}$$

Hence, the energy $E_2$ of the ions as they exit the travelling wave ion guide is a constant fraction equal to exp$(-2(L_2/L_1))$ of the energy $E_1$ they had on entering the ion guide. Hence their energy is independent of their mass to charge ratio. For two reasons this is a particularly favourable outcome.

Firstly, the gas in the travelling wave ion guide will result in frequent ion-molecule collisions which in turn will cause the ions to lose kinetic energy. In the presence of an RF confining field both the axial and radial kinetic energies will be reduced. Furthermore, the axial and radial energies decay approximately exponentially with distance travelled into the ion guide as disclosed in J. Am. Soc. Mass Spectrom., 1998, 9, pp 569-579. From computer simulations it has been estimated that the kinetic energies in the axial and radial directions reduce to 10% whilst passing through a nitrogen gas pressure-distance product of approximately 0.1 mbar-cm. Hence, both the travelling wave velocity and the ion kinetic energies preferably decay exponentially. These two exponential decay rates can be arranged to be approximately the same by appropriate choice of the collision gas molecular mass and pressure. If the travelling wave velocity were set significantly higher than the intrinsic velocity of the ions, then the ions may be caused to fragment which may be undesirable in some modes of operation.

Secondly, it is a characteristic of orthogonal acceleration Time of Flight mass spectrometers that all ions, irrespective of their mass to charge ratio, need to be injected into the orthogonal acceleration region with substantially the same axial energy. Since the ions exiting the travelling wave ion guide will have substantially constant energy independent of their mass to charge ratio then it is only necessary to accelerate the ions through a constant voltage difference $V_3$ after they have left the travelling wave ion guide to give the ions the correct energy $E_3 = E_2 + zeV_3$ when injected into the orthogonal acceleration region of the orthogonal Time of Flight mass analyser.

As the ions exit the travelling wave ion guide in pulses they will be grouped such that each group contains only ions within a limited range of mass to charge ratios and each group of ions will have ions with an average mass to charge ratio slightly higher than that of a preceding group emitted from the ion guide. Each group of ions after the acceleration stage will have substantially the same energy $E_3$ and therefore their substantially similar transit time to the orthogonal acceleration region of the orthogonal acceleration Time of Flight mass analyser will be proportional to the square root of their average mass. If for each group of ions exiting the travelling wave ion guide the delay time $T_x$ of the pusher electrode of the orthogonal acceleration Time of Flight mass analyser is increased in proportion to the square root of the mass of ions released from the ion guide, then the orthogonal acceleration can be arranged to coincide with the arrival of each group of ions at the orthogonal acceleration region. A very high (approximately 100%) duty cycle can therefore be achieved according to the preferred arrangement.

The time for ions to travel to the exit of the ion guide is $T_2$ which is proportional to $T_1$ which is in turn proportional to the square root of the mass to charge ratio of the ions:

$$T_2 = T_1 e^{\left(\frac{L_2}{L_1}\right)}$$

$$T_1 = 72L_1 \sqrt{\frac{m}{E_1}}$$

The time for ions to travel from the exit of the travelling wave ion guide to the orthogonal acceleration region is the delay time $T_x$ and is also proportional to the square root of the mass to charge ratio of the ions:

$$T_x = 72L_3 \sqrt{\frac{m}{E_3}}$$

Hence the delay time $T_x$ needs to be proportional to $T_1$:

$$T_x = \frac{L_3}{L_1} \sqrt{\frac{E_1}{E_3}} T_1$$

In other words, the delay time $T_x$ needs to increase linearly with the time from the original pulse of ions leaving the ion source or ion trap.

As a consequence of the gas present in the travelling wave ion guide and preferably the continuously slowing travelling DC wave velocity, the kinetic energy of the ions will be reduced by a constant factor equal to $\exp(-2(L_2/L_1))$ when they emerge from the travelling wave ion guide. If the ions have a substantial energy spread when they enter the travelling wave ion guide then advantageously this will be reduced.

In summary, both the travelling waveform cycle time and the pusher electrode delay time may increase substantially linearly with time starting from the time of the original pulse of ions leaving the pulsed ion source or ion trap. Ions will exit from the travelling wave ion guide with reduced energy and reduced energy spread. The ions exiting the ion guide will also have a substantially constant energy and may be accelerated to higher constant energy with a constant difference in potential. Under such circumstances, ions will arrive at the orthogonal acceleration stage of the orthogonal Time of Flight mass analyser with substantially constant energy and the sampling duty cycle may be as high as 100% for all ions irrespective of their mass.

According to the present invention instead of using a pulsed ion source and a flight tube, a mass to charge ratio selective ion trap such as a 3D ("Paul") or 2D (linear) quadrupole ion trap is used. The mass to charge ratio selective ion trap is operated in a mass selective ejection mode or resonance ejection mode. For such an ion trap, in which only ions having a relatively narrow range of mass to charge ratios are released from the ion trap, the initial flight tube previously required to separate ions according to their mass to charge ratios is no longer required. Hence, the ion trap may now be positioned in close proximity or directly adjacent to the entrance to the travelling wave ion guide.

The operation of the travelling wave ion guide may be substantially the same as that previously described in relation to the first arrangement. The velocity of the travelling wave may be arranged to be programmed as though the ions of the selected masses had originated from the ion source or ion trap according to the first main arrangement. Hence, the travelling wave ion guide may be arranged to be co-ordinated with the mass to charge ratios of the ions ejected from the ion trap at any particular point in time. Since the travelling DC potential wave is programmed as though the ions originated from a virtual ion source, the programming of the travelling wave ion guide can be selected for any virtual flight tube length $L_1$. This now provides a degree of freedom in the choice of exponential decay of ion energies as they travel through the travelling wave ion guide. This degree of freedom is in addition to that of the gas molecular weight and gas pressure that determines the exponential decay rate of the ion kinetic energies due to ion-molecule collisions. Hence, this arrangement provides greater flexibility when seeking to match these two decay rates.

Any energy spread in the ion beam ejected from the mass to charge ratio selective ion trap may also be reduced as the ions travel through the travelling wave ion guide. The addition of the travelling wave ion guide and flight tube between the ion trap and orthogonal acceleration Time of Flight mass analyser reduce the energy spread of the ions and hence improves the sensitivity and resolution of the Time of Flight mass spectrometer.

The preferred embodiment entails superimposing a repeating pattern of DC electrical potentials along the length of the ion guide so as to form a periodic DC potential waveform ("travelling wave") and causing the waveform to travel or the applied DC potentials to be translated along the ion guide in the direction in which it is required to move the ions and at a velocity at which it is required to move the ions.

The AC or RF ion guide may comprise a multipole rod set or stacked ring set. The ion guide is preferably segmented in the axial direction so that independent transient DC potentials may be applied to each segment and superimposed on top of an AC or RF confining voltage and any constant DC offset voltage. The DC potentials are changed temporally to generate a travelling DC wave in the axial direction.

At any instant in time a voltage gradient is generated between segments to push or pull the ions in a certain direction. As the voltage gradient moves in the required direction so do the ions. The individual DC voltages on each of the segments are preferably programmed to create the desired waveform. The individual DC voltages on each of the segments may also be programmed to change in synchronism such that the waveform (and preferably the wavelength) is maintained but shifted in the direction in which it is desired to move the ions.

The DC potential waveform is preferably superimposed on any nominally imposed axial DC voltage offset. No axial voltage gradient is required although less preferably the travelling DC wave may be provided in conjunction with an axial DC voltage gradient by the application of the travelling waveform superimposed on any axial DC voltage gradient. The transient DC voltage applied to each segment may be above or below that of the constant DC voltage offset to cause movement of the ions in the axial direction or could be a combination of both.

Various embodiments of the present invention will now be described, by way of example only, and with reference to the accompanying drawings in which:

Fig. 1 shows a simplified diagram of a segmented AC or RF ion guide according to the preferred embodiment;

Fig. 2 shows a repeating DC potential waveform which may be applied to an ion guide according to the preferred embodiment;

Fig. 3 illustrates how a repeating transient DC voltage waveform may be generated;

Fig. 4 shows an arrangement not forming part of the present invention; and

Fig. 5 shows a graph illustrating the arrival time $T_1$ of ions arriving at the ion guide show in Fig. 4, the time $T_2$ that the ions exit the ion guide and the arrival time $T_3$ of the ions at a pusher electrode of an orthogonal acceleration Time of Flight mass analyser for ions of varying mass to charge ratio.

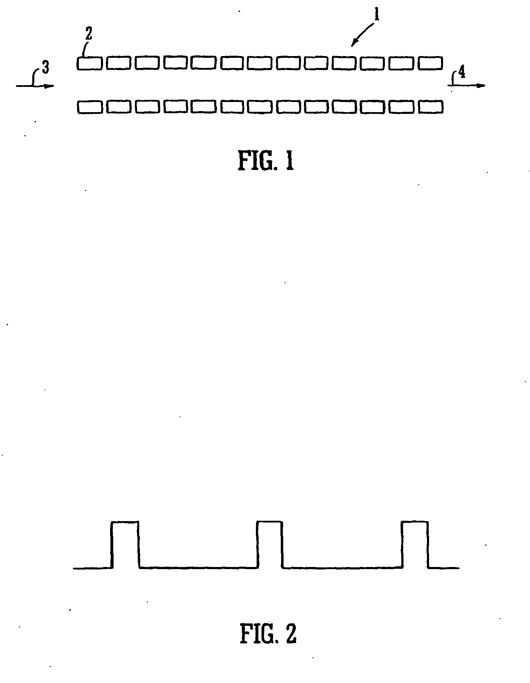

As shown in Fig. 1 the preferred embodiment relates to an AC or RF ion guide 1 comprising a plurality of electrodes 2. Ions arrive at an entrance 3 to the ion guide 1 and leave the ion guide 1 via an exit 4. The ion guide 1 may comprise a plurality of segments, each segment comprising one or more electrodes 2. The electrodes in a particular segment are preferably maintained at substantially the same DC potential. The DC voltage applied to each segment may be programmed to change continuously or in a series of steps. The sequence of DC voltages applied to each segment may repeat at regular intervals or at intervals which may progressively increase or decrease. The time over which the complete sequence of DC voltages is applied to a particular segment is the cycle time T. The inverse of the cycle time is the travelling DC wave frequency f. The distance along the AC or RF ion guide 1 over which the DC potential waveform repeats itself is the wavelength $\lambda$. The wavelength divided by the cycle time is the velocity $V_{wave}$ of the travelling DC wave. Hence, the travelling wave velocity:

$$v_{wave} = \frac{\lambda}{T} = \lambda\,f$$

According to the preferred embodiment the velocity of the DC potential waveform is arranged to substantially equal that of the velocity of the ions arriving at the ion guide 1. For a given wavelength, the travelling DC wave velocity may be controlled by selection of the cycle time. If the cycle time T progressively increases then the velocity of the DC potential waveform will progressively decrease. The optimum velocity of the travelling DC potential waveform depends on a number of parameters including the mass of the ions and the pressure and composition of the gas in the ion guide 1.

The travelling wave ion guide 1 may be operated at intermediate pressures between 0.0001 and 100 mbar, preferably between 0.001 and 10 mbar, wherein the gas density will be sufficient to impose a viscous drag on the ions. The gas at these pressures will appear as a viscous medium to the ions and will act to slow the ions. The viscous drag resulting from frequent collisions with gas molecules prevents the ions from building up excessive velocity. Consequently, the ions will tend to ride on or with the travelling DC potential waveform rather than run ahead of the DC potential waveform and execute excessive oscillations within the potential wells which are being translated along the length of the ion guide 1.

The presence of a gas in the ion guide 1 imposes a maximum velocity at which the ions will travel through the gas for a given field strength. The higher the gas pressure the more frequent the ion-molecule collisions and the slower the ions will travel for a given field strength. The energy of the ions will be dependent upon their mass and the square of their velocity. If fragmentation is not desired, then the energy of the ions may be kept below about 5-10 eV. This may impose a limit on the velocity of the DC potential waveform. Consequently, the optimum DC potential wave velocity will vary with the mass of the ion, the gas pressure and whether it is desired to transport ions with minimal fragmentation or to fragment ions.

A feature of the preferred ion guide 1 is that the ion guide 1 emits a pulsed beam of ions. The repetition rate of the pulses of ions can be tailored to a mass analyser downstream of the ion guide 1 in terms of scan rates and acquisition times. For example, in a scanning quadrupole system the repetition rate can be made high enough to prevent pulsing across the mass range. In a triple quadrupole tandem mass spectrometer operating in a MRM mode the repetition frequency may be made compatible with the reaction monitoring dwell times. With a quadrupole Time of Flight tandem mass spectrometer, the repetition frequency may be synchronised with the pusher pulses on the Time of Flight mass analyser to maximise ion sampling duty cycle and hence sensitivity.

Other embodiments are contemplated wherein the operation of an ion trap and/or a mass filter is substantially synchronised with the pulses of ions emerging from the ion guide.

The pulsed nature of ions exiting the ion guide 1 is a feature of the preferred ion guide 1. Furthermore, the ion guide 1 may be used to transport a series of ion packets without allowing the ions to become dispersed and merged one with the next. The pulsed nature of ions emitted from the ion guide 1 also allows the detection system to be phase locked with the ion pulses. For example, the detection system response may be modulated or pulsed in the same way the ion beam is modulated or pulsed. This provides a means of improving the signal to noise of the ion detection system since any continuous noise, white noise, or DC offset in the detection system can essentially be eliminated from the detected signal.

Similarly when the travelling wave ion guide 1 is interfaced with a discontinuous mass analyser, the pulsing of an orthogonal acceleration Time of Flight mass spectrometer can be synchronised with the frequency of the DC potential waveform to maximise the duty cycle for ions of a particular range of mass to charge ratios. The range of masses for which the duty cycle is maximised will be determined by the distance from the exit of the travelling wave ion guide 1 to the orthogonal acceleration region, the energy of the ions and the phase shift between that of the travelling waveform and that of the pulsing of the orthogonal acceleration Time of Flight mass spectrometer.

The amplitude of the DC potential waveform may be progressively attenuated towards the entrance of the ion guide 1 i.e. the amplitude of the DC potential waveform grows to its full amplitude over the first few segments of the travelling wave ion guide 1. This allows ions to be introduced into the ion guide 1 with minimal disruption to their sequence.

A particular advantage of a preferred arrangement, which is described for illustrative purposes only and which does not form part of the present invention, is that it enables ions which have become dispersed according to their mass to charge ratio or ion mobility prior to the ion guide 1 to be trapped in multiple trapping regions within the ion guide 1 so that the ions in any one particular trapping region have substantially similar physico-chemical properties. For example, the travelling wave ion guide 1 may be used in conjunction with a pulsed ion source, such as a laser ablation source or MALDI source. Alternatively, the ions may be released in a pulse from an ion trap. In either case the ions preferably pass through a region wherein they are arranged into some sequence before reaching the travelling wave ion guide 1. For example, if the ions from an ion source are accelerated to a given energy and are allowed to pass through a field free region maintained at a relatively low pressure then ions of different masses will travel at different velocities. Hence, ions of lighter mass that have higher velocities will arrive at the ion guide 1 before heavier ions having lower velocities. On arrival at the ion guide 1 ions will be effectively collected in groups according to their mass to charge ratio and transported through the travelling wave ion guide 1 as a discrete group. Ions will therefore emerge at the exit of the travelling wave ion guide 1 in packets consisting of ions with mass to charge ratios falling within a relatively narrow range. Each group of ions exiting the travelling wave ion guide 1 will have an average mass to charge ratio slightly higher than that of a preceding group which has already exited the ion guide 1. This process whereby ions are separated and packaged into groups with a similar physical property, such as mass to charge ratio, can be useful for a number of applications.

One particular application is to use a travelling wave ion guide 1 to transport ions to an ion trap, or to a discontinuous mass analyser such as a quadrupole ion trap, or FTICR mass analyser, or a Time of Flight mass analyser. When ions exit the travelling wave ion guide 1 with a given energy or when they are accelerated to a given energy then ions with different mass to charge ratios will travel with different velocities to the ion trap or mass analyser. Accordingly, if ions with a wide range of mass to charge ratios exit the travelling wave ion guide 1 then the different ions will arrive at the ion trap or mass analyser at substantially different times. In some circumstances this makes it difficult or even impossible to accommodate all the different ions. For example, if the mass analyser is an orthogonal acceleration Time of Flight mass analyser then only ions in the acceleration region at the time of the acceleration pulse will be accelerated into the Time of Flight mass analyser. However, if only ions with a relatively narrow range of mass to charge ratios or essentially the same mass to charge ratio exit the travelling wave ion guide 1 at any particular time, then the delay time of the orthogonal acceleration pulse can be effectively synchronised with the arrival of those ions at the acceleration region. In this way the sampling duty cycle for the ions released from the ion guide 1 can be as high as 100%.

The next package of ions to be released from the travelling wave ion guide 1 will also have a narrow but slightly higher range of mass to charge ratios. The delay time of the orthogonal acceleration pulse can therefore preferably be slightly increased so that it is again made to synchronise with the arrival of those ions at the acceleration region. Accordingly, the sampling duty cycle for these ions may also be maintained at substantially 100%.

This process can preferably be repeated by progressively increasing delay times so that all the ions from the original pulsed source of ions are collected by the ion guide 1 and are transmitted through the ion guide 1. The ions are then ejected from the ion guide 1 and subsequently sampled with a 100% duty cycle by the orthogonal acceleration Time of Flight mass analyser.

The separation of ions according to their mass to charge ratio before arrival at the travelling wave ion guide 1 may take place in a field free region or in a further ion guide. The further ion guide is preferably an AC or RF ion guide although other ion guides, such as those employing guide wires, may less preferably be used.

Other means may be used to separate the stream of ions before arrival at the travelling wave ion guide 1. For example, the ions may pass through a drift tube having an axial DC voltage gradient and which is maintained at an intermediate gas pressure between 0.001 and 100 mbar, further preferably between 0.01 and 10 mbar, such that ions separate according to their ion mobility. The ions thus become separated and packaged into groups for transport through the travelling wave ion guide 1.

An ion guide 1 according to an embodiment comprises a stacked ring AC or RF ion guide 180 mm long and comprising 120 stainless steel rings each 0.5 mm thick and spaced apart by 1 mm. The internal aperture in each ring is preferably 5 mm in diameter. The frequency of the RF supply is preferably 1.75 MHz and the peak RF voltage can be varied up to 500 V. The stacked ring ion guide 1 is preferably positioned in an enclosed collision cell chamber positioned between the two quadrupole mass filters/analysers in a triple quadrupole mass spectrometer. The pressure in the enclosed collision cell chamber may be varied up to 0.01 mbar. The stacked ring AC or RF ion guide 1 may in one embodiment be electrically divided into 15 segments each 12 mm long and consisting of 8 rings. Three different DC voltages may be connected to every third segment such that the sequence of voltages applied to the first three segments is repeated a further four times along the whole length of the stacked ring set. The three DC voltages applied to every third segment may be independently programmed up to 40 V. The sequence of voltages applied to each segment may create DC potential waveforms with a potential hill, repeated five times throughout the length of the stacked ring set. For this particular embodiment the wavelength of the travelling DC potential waveform is 36 mm (3 x 12 mm). The cycle time for the sequence of voltages on any one segment was 23 $\mu$s. Hence, the wave velocity was 1560 m/s (36 mm/23 $\mu$s).

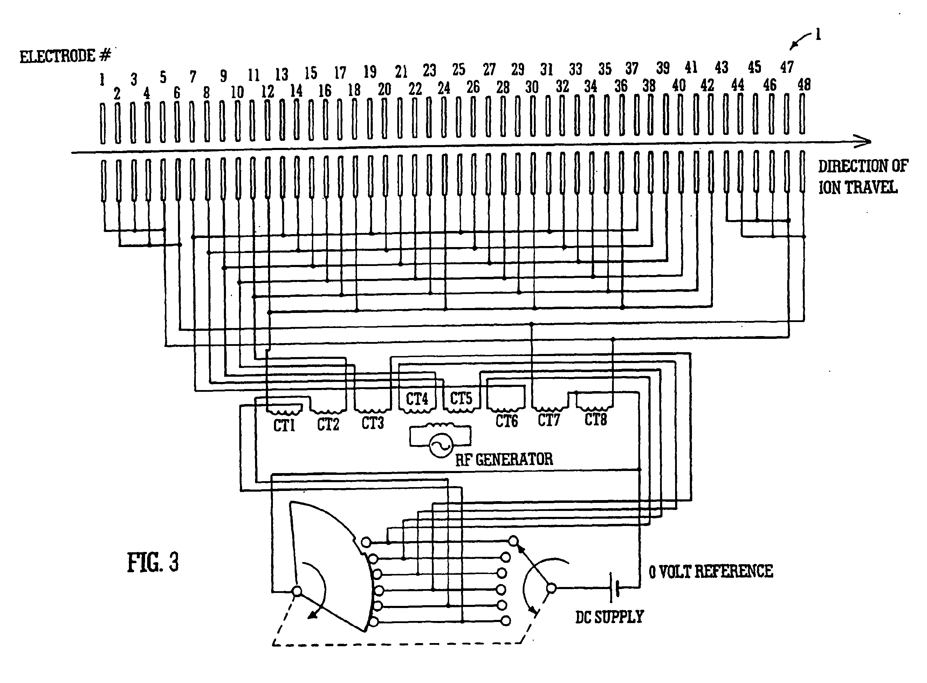

The operation of a travelling wave ion guide 1 will now be described with reference to Fig. 3. The preferred embodiment preferably comprises 120 electrodes but 48 electrodes are shown in Fig. 3 for ease of illustration.

Alternate electrodes are preferably fed with opposite phases of a RF supply (preferably 1 MHz and 500 V p-p). The ion guide 1 may be divided into separate groups of electrodes (6 groups of electrodes are shown in Fig. 3). The electrodes in each group may be fed from separate secondary windings on a coupling transformer as shown in Fig. 3. These are connected so that all the even-numbered electrodes are 180° out of phase with all the odd-numbered electrodes. Therefore, at the point in the RF cycle when all the odd numbered electrodes are at the peak positive voltage, all the even-numbered electrodes are at the peak negative voltage.

Groups of electrodes at each end of the ion guide 1 (e.g. electrodes #1-6 and #43-48) may be supplied with RF only potentials whereas the central groups (e.g. electrodes #7-12, #13-18, #19-24, #25-30, #31-36 and #37-42) may be supplied with both RF and DC potentials. Electrodes #1, #3, #5, #43, #45 and #47 may be connected to one pole of the secondary winding CT8 and electrodes #2, #4, #6, #44, #46 and #48 may be connected to the opposite end of winding CT7 to ensure the correct RF phasing of the electrodes. The other ends of these windings are connected to the 0 V DC reference so that only RF potentials are applied to the end groups of electrodes. Electrodes #7, #13, #19, #24, #31 and #37 which are the first electrodes of each of the central groups are connected together and fed from secondary winding CT6. Windings CT5, CT4, CT3, CT2 and CT1 respectively supply the second through sixth electrodes of each of central groups. Each of windings CT1-6 is referred to a different DC reference point shown schematically by the 2-gang switch in Fig. 3 so that the first through sixth sets of electrodes of the central groups of electrodes can be supplied with a DC potential selected by the switch, as well as the RF potentials.

In the preferred mode of operation only one set of interconnected electrodes comprised in the central groups is supplied with a DC voltage at any given instant. All the other windings are referenced to 0V DC at that particular instant. For example, with the switch in the position illustrated in Fig. 3, winding CT6 of the transformer may be connected to the DC supply biasing all the first electrodes (e.g. electrodes #7, #13, #19 etc.) of the central groups relative to all other electrodes.

If the switch is then moved to the next position, winding CT5 is connected to the DC supply, biasing all the second electrodes (e.g. electrodes #8, #14, #20 etc.) while the first electrodes (e.g. electrodes #7, #13, #19 etc.) are returned to 0 V DC.

When used as a travelling wave ion guide 1 the switch can be effectively rotated continuously biasing in turn the first through sixth electrodes and then repeating the sequence without interruption. A mechanical switch is shown in Fig. 3 for sake of illustration. Electronic switching may more preferably be used to carry out the switching. Each transformer winding CT1-8 may be fed by a Digital to Analogue Converter which can apply the desired DC potential to the winding under computer control.

Typical operating conditions may have an RF peak-to-peak voltage of 500 V, an RF frequency of 1 MHz, a DC bias of +5 V (for positive ions) and a switching frequency of 10-100 kHz.

If a positive ion enters the ion guide 1 when the switch is in the position shown in Fig. 3 and a positive DC potential is applied to electrode #7 then the ion will encounter a potential barrier at electrode #7 which prevents its further passage along the ion guide 1 (assuming that its translational kinetic energy is not too high). As soon as the switch moves to the next position, however, this potential barrier will shift to electrode #8 and then electrode #9, #10, #11 and #12 upon further rotation of the switch. This allows the ion to move further along the ion guide 1. On the next cycle of operation of the switch, the barrier in front of the ion moves to electrode #13 and a new potential barrier now appears on electrode #7 behind the ion. The ion therefore becomes contained or otherwise trapped in a potential well between the potential barriers on electrodes #7 and #13. Further rotation of the switch moves this potential well from electrodes #7-13 to electrodes #8-14, then #9-15, through to #12-18. A further cycle of the switch moves this potential well in increments of one electrode from electrodes #12-18 through to electrodes #18-24. The process repeats thereby pushing the ion along the ion guide 1 in its potential well until it emerges into the RF only exit group of electrodes #43-48 and then subsequently leaves the ion guide 1.

As a potential well moves along the ion guide 1, new potential wells capable of containing more ions may be created and moved along behind it. The travelling wave ion guide 1 therefore carries individual packets of ions along its length in the travelling potential wells while simultaneously the strong focusing action of the RF field tends to confine the ions to the axial region.

According to a particularly preferred embodiment a mass spectrometer is provided having two quadrupole mass filters/analysers and a collision cell. A travelling wave ion guide 1 may be provided upstream of the first mass filter/analyser. A transient DC potential waveform may be applied to the travelling wave ion guide 1 having a wavelength of 14 electrodes. The DC voltage is preferably applied to neighbouring pairs of electrodes 2 and is preferably stepped in pairs. Hence, according to the preferred embodiment there are seven steps in one cycle. Therefore, at any one time there are two electrodes with a transient applied DC voltage followed by 12 electrodes with no applied DC voltage followed by two electrodes with a transient applied DC voltage followed by 12 electrodes with no applied DC voltage etc.

A buffer gas (typically nitrogen or helium) may be introduced into the travelling wave ion guide 1. If the ion guide 1 is used to interface a relatively high pressure source to a high-vacuum mass analyser or is used as a collision cell then gas will already be present in the ion guide 1. The buffer gas is a viscous medium and is preferably provided to dampen the motion of the ions. The presence of gas tends to thermalise the ion translational energies. Therefore, ions entering the ion guide 1 may become thermalised by collisional cooling irrespective of the kinetic energy possessed by the ions and they will be confined in their potential wells as they travel through the ion guide 1. Assuming that the potential barriers are sufficiently high to ensure the ions remain in the potential well, their transit time through the ion guide 1 will be independent of both their initial kinetic energy and the gas pressure. The ion transit time will therefore be determined solely by the rate at which the potential wells are moved or translated along the ion guide 1 and will be a function of the switching rate of the electrode potentials. This property can be exploited advantageously in a number of applications and leads to improvements in performance when compared to instruments using conventional rod-set guides in which this control is unavailable.

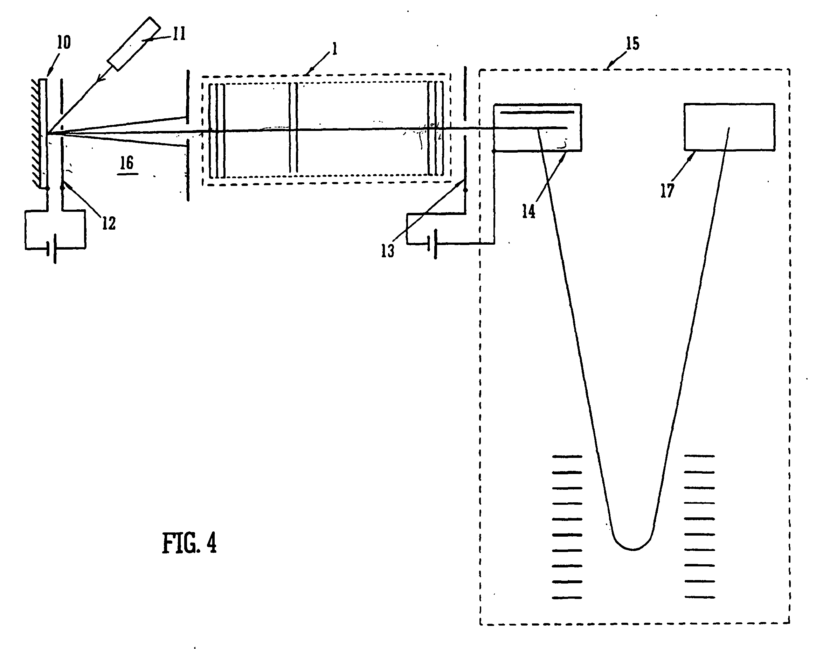

An arrangement not forming part of the present invention is shown in Fig. 4. The travelling wave ion guide 1 advantageously allows the ion transit time to be controlled unlike other ion guides and in particular allows a MALDI-TOF instrument to be operated in a very efficient way with virtually a 100% ion transmission and analysis efficiency.

A sample to be analysed is coated on a target 10 and is bombarded with photons from a laser 11. Ions so produced pass through an aperture in an extraction electrode 12 and then through a travelling wave ion guide 1. On exiting the travelling wave ion guide 1 they pass through an exit electrode 13 and enter the pulser 14 of a Time of Flight mass analyser 15. A linear or a reflecting Time of Flight mass analyser 15 may be provided. An orthogonal reflecting type is preferred and is shown in Fig. 4. Operation of the pulser 14 and Time of Flight mass analyser 15 is conventional. Gas (e.g. nitrogen) may be introduced into the travelling wave ion guide 1 at e.g. a pressure of between $10^{-3}$ and 1 mbar in order to provide collisional cooling of the ions as they are carried through the travelling wave ion guide 1.

An accelerating region is preferably provided between the target 10 and the extraction electrode 12 and a 10 V potential gradient may be provided to accelerate positive ions as shown. This region is preferably followed by a field-free region 16 between the extraction electrode 12 and the entrance of the travelling wave ion guide 1. According to one arrangement the length of the field free region 16 is 250 mm.

Another accelerating field may be provided between the travelling wave ion guide exit electrode 13 and the Time of Flight pulser 14, as shown. A 40 V potential gradient may, for example, be provided in this region.

The accelerating fields and the field-free region 16 interact with the operation of the travelling wave ion guide 1 to enable a mode of operation which is highly efficient. The ion source, acceleration regions and field-free region 16 are preferably maintained at relatively high vacuum.

It is known that the majority of ions ejected from the MALDI target 10 will have a range of velocities typically between about 0.5 and 2.0 times the speed of sound, on average about 300-400 m/s. This spread in velocities accounts for the relatively large spread in ion energies. In the arrangement shown in Fig. 4 an accelerating field exists between the target 10 and the extraction electrode 12 so that the ions gain an equal amount of kinetic energy on passing through the field which adds a mass dependent component of velocity to their approximately constant ejection velocity. Since kinetic energy KE:

$$KE = \frac{mv^2}{2}$$

then if the energy is constant, the added velocity is proportional to $1/\sqrt{m}$.

The ions then enter a field-free drift region 16 between the extraction electrode 12 and the entrance of the travelling wave ion guide 1 in which they begin to separate according to their mass to charge ratios because of the different mass-dependent velocities imparted to them during the prior acceleration stage. Consequently, the lightest ions arrive first at the entrance to the travelling wave ion guide 1. These ions will enter the travelling wave ion guide 1 and become trapped in a DC potential well. As that DC potential well moves or is translated along the length of travelling wave ion guide 1, a second DC potential well opens behind it into which some slightly heavier ions will become trapped. These ions will have taken slightly longer to reach the travelling wave ion guide entrance because they will have moved slightly more slowly through the field free region 16 than the lightest ions. Thus it will be seen that the combined effect of the accelerating region, field-free region 16 and the travelling DC potential wells of the travelling wave ion guide 1 results in a series of DC potential wells reaching the end of the travelling wave ion guide 1 with each potential well or trapping region containing ions of similar mass to charge ratios. The first potential well or trapping region arriving at the exit of the travelling wave ion guide 1 will contain the lightest ions, the following potential wells or trapping regions will contain ions of steadily increasing mass to charge ratios and the last potential well or trapping region will contain the heaviest ions from any particular laser pulse.

Since the ions remain trapped in their potential wells during their passage or translation through the traveling wave ion guide 1, the ions preferably do not mix with ions in different potential wells. Since gas is present in the travelling wave ion guide 1 this results in collisional cooling of the ions in each potential well whilst the travelling potential well continues to push the ions forward at a velocity equal to that of the potential well. Consequently, by the time the ions reach the end of the travelling wave ion guide 1 the ions in each potential well will have lost most of their initial velocity spread even though they have a bulk velocity equal to that of the potential well. In other words, their initial relatively large spread in energy is reduced to that of the thermal energy of the buffer gas.

When the first potential well (containing the lightest ions with substantially only thermal energies) reaches the end of the travelling wave ion guide 1 the front potential barrier disappears and the rear potential barrier pushes the ions out of the travelling wave ion guide 1 into another accelerating field between the exit of the travelling wave ion guide 1 and the pusher electrodes of the Time of Flight mass analyser 15. Typically, a gradient of about 40 V may be applied. This field rapidly accelerates the ions into the pusher region 14, but because they all start with similar (very low) kinetic energy and because the potential well contains only ions having a limited range of masses, the ions do not significantly separate in space during this acceleration. The slowest ions released from the potential well will therefore still enter the pusher region 14 before the fastest ions can exit the pusher region 14. Consequently, if the pusher voltage is applied at this precise time then all the ions contained in a particular potential well or trapping region can be analysed by the Time of Flight mass analyser 15 without loss. Advantageously, a single TOF push, synchronised with but delayed from the arrival of a potential well at the exit of the travelling wave ion guide 1 may be used to analyse all the ions in a potential well. The preferred arrangement is therefore capable of mass analysing all the ions from a given laser pulse with virtually a 100% efficiency.

The preferred arrangement can be yet further refined by varying the travelling wave ion guide switching speed during the arrival of ions at the travelling wave ion guide 1 following a laser pulse. The collection of ions into individual potential wells will proceed with least disruption to their grouping by mass to charge ratio if the velocity of the potential wells is arranged to substantially match the velocities of the ions arriving at the entrance to the travelling wave ion guide 1. The ions arriving at the travelling wave ion guide 1 from each laser pulse will have progressively slower velocities as the elapsed time from the laser pulse increases as their velocity is simply the length of the field free region 16 from the target plate 10 to the travelling wave ion guide 1 divided by the elapsed time. Accordingly, the velocity of the potential wells in the travelling wave ion guide 1 may be continuously reduced so as to continuously match the velocity of the ions arriving at the entrance of the travelling wave ion guide 1. This can be achieved by arranging the travelling wave ion guide switching time intervals to increase linearly with elapsed time from the laser pulse.

As a consequence, the velocities of the ions within potential wells within the travelling wave ion guide 1 will also preferably continuously reduce. Since the ions have a natural tendency to slow due to the viscous drag of the collision gas, by appropriate selection of gas type and pressure the natural slowing of ions due to viscous drag can be made to substantially match the slowing velocity of the potential wells in the travelling wave ion guide 1 thereby reducing the chances of any ions fragmenting unintentionally in the ion guide 1.

Another advantage of this arrangement is that the energy of the ions leaving the travelling wave ion guide 1 is approximately constant (otherwise, the energy of the ions would increase with the increasing mass of the ions in the later arriving potential wells). The ions therefore leave the travelling wave ion guide 1 with substantially the velocity of the potential barriers moving along the travelling wave ion guide 1. If the traveling DC wave velocity is kept constant then ions with higher masses will have greater kinetic energies than ions with lower masses. However, ions entering an orthogonal Time of Flight mass analyser 15 should preferably all have approximately the same energy in order to avoid spatial separation of ions when they arrive at the ion detector 17. It is therefore necessary for all ions to have substantially the same energy in order to ensure that all the ions ultimately hit the ion detector 17. This can be achieved by reducing the velocity of the potential barriers as the heavier masses arrive at and leave the travelling wave ion guide 1. If the velocity of the potential wells is reduced by arranging the travelling wave ion guide switching time intervals to increase linearly with elapsed time from the laser pulse, then the ions all advantageously exit the travelling wave ion guide 1 with approximately the same energy independent of their mass.

In order to allow for the lower velocity of the higher mass ions, the delay between the arrival of a potential well at the exit of the travelling wave ion guide 1 and the operation of the Time of Flight pulser 14 is preferably increased in synchronism with the increased switching time intervals of the travelling wave ion guide operation.

A theoretical treatment of the effect of gas collisions in the travelling wave ion guide 1 or the transport of ions in the potential well shows that the potential well translation velocity (i.e. the switching speed of the travelling wave ion guide) should be reduced exponentially during the time the laser desorbed ions are arriving at the travelling wave ion guide.

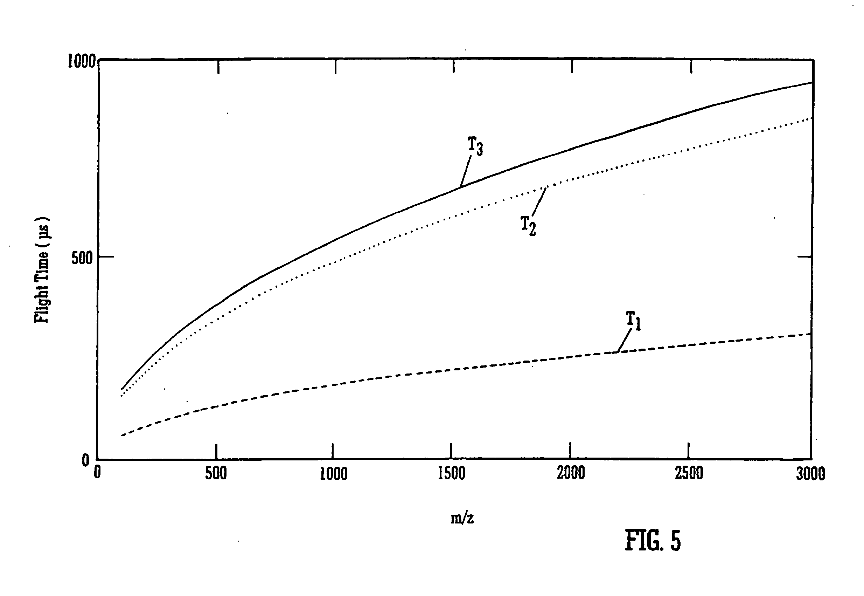

Fig. 5 illustrates how ions of differing mass to charge ratios will arrive at the travelling wave ion guide 1 shown in Fig. 4 as a function of time $T_1$. Fig. 5 also illustrates the exit time $T_2$ of the ions from the travelling wave ion guide 1 and the arrival time $T_3$ of the ions at the orthogonal acceleration Time of Flight mass analyser 15.

The curves shown in Fig. 5 assume that ions are released or generated at time T=0 and are accelerated by a voltage $V_1$ of 10 V. The ions will therefore have an energy of $E_1$ (eV) where $E_1 = 10$. The distance $L_1$ (m) from the pulsed ion source 10,11 to the entrance of the travelling wave ion guide 1 is 0.25 m. The arrival time $T_1$ for ions at the entrance to the travelling wave ion guide 1 is therefore given by:

$$T_1 = 72L_1 \sqrt{\frac{m}{E_1}}$$

The velocity v (m/s) of the transient DC voltage waveform and/or of the ions arriving at the travelling wave ion guide 1 is given by:

$$v = \frac{L_1}{T_1} . 10^6$$

The length $L_2$ (m) of the travelling wave ion guide is 0.25 m. The time $T_2$ at which ions exit the travelling wave ion guide 1 is given by:

$$T_2 = T_1 e^{\left(\frac{L_2}{L_1}\right)}$$

The velocity $v_x$ of the transient DC voltage waveform and/or the ions at the exit of the travelling wave ion guide 1:

$$v_x = v e^{-\left(\frac{L_2}{L_1}\right)}$$

The energy $E_2$ (eV) of ions at the exit of the travelling wave ion guide 1 is:

$$E_2 = E_1 e^{-2\left(\frac{L_2}{L_1}\right)}$$

and hence:

$$E_2 = 1.353$$

The ions are further accelerated by a voltage $V_3$ (V) at the exit of the travelling wave ion guide 1:

$$V_3 = 38.647$$

The energy $E_3$ (eV) of the ions therefore after acceleration:

$$E_3 = E_2 + V_3$$

where $E_3 = 40$. The path length $L_3$ (m) from the travelling wave ion guide 1 to the orthogonal acceleration pusher region is 0.15 m. The flight time $T_x$ from the exit of the travelling wave ion guide 1 to the orthogonal acceleration pusher region 14:

$$T_x = 72 L_3 \sqrt{\frac{m}{E_3}}$$

The arrival time $T_3$ at the orthogonal acceleration pusher region:

$$T_3 = T_2 + T_x$$

Although the present invention has been described with reference to preferred embodiments, it will be understood by those skilled in the art that various changes in form and detail may be made without departing from the scope of the invention as set forth in the accompanying claims.

**Claims**

1. A mass spectrometer comprising:

   a mass to charge ratio selective ion trap which releases in use at least a first group of ions having mass to charge ratios within a first range and then at least a second group of ions having mass to charge ratios within a second range;
   an ion guide (1) comprising a plurality of electrodes (2) arranged to receive at least some of said first group of ions and at least some of said second group of ions;
   means arranged and adapted to generate or create multiple trapping regions along at least a portion of the length of said ion guide, wherein at least some of the ions of said first group are trapped within a first trapping region and at least some of the ions of said second group are trapped within a second different trapping region; and means arranged and adapted to translate said multiple trapping regions along at least a portion of the length of said ion guide (1), wherein one or more transient DC voltages or one or more transient DC voltage waveforms are progressively applied to said electrodes (2) so that said multiple trapping regions move along said ion guide (1).

2. A mass spectrometer as claimed in claim 1, wherein said mass to charge ratio selective ion trap is selected from the group consisting of: (i) a 2D (linear) quadrupole ion trap; (ii) a 3D quadrupole ion trap; and (iii) a Penning ion trap.

**3.** A mass spectrometer as claimed in claim 1 or 2, wherein at least a majority of the ions trapped within said first trapping region have substantially the same mass to charge ratio and/or at least a majority of the ions trapped within said second trapping region have substantially the same mass to charge ratio.

**4.** A mass spectrometer as claimed in claim 1, 2 or 3, wherein at least a majority of the ions trapped within said first trapping region have mass to charge ratios which differ by less than x mass to charge ratio units and/or at least a majority of the ions trapped within said second trapping region have mass to charge ratios which differ by less than x mass to charge ratio units, wherein x is selected from the group consisting of : (i) 500; (ii) 450; (iii) 400; (iv) 350; (v) 300; (vi) 250; (vii) 200; (viii) 150; (ix) 100; (x) 90; (xi) 80; (xii) 70; (xiii) 60; (xiv) 50; (xv) 40; (xvi) 30; (xvii) 20; (xviii) 10; and (xix) 5.

**5.** A mass spectrometer as claimed in any preceding claim, wherein at least a majority of the ions trapped within said first trapping region and/or at least a majority of the ions trapped within said second trapping region have mass to charge ratios which differ by less than: (i) 30%; (ii) 25%; (iii) 20%; (iv) 15%; (v) 10%; (vi) 5%; (vii) 4%; (viii) 3%; (ix) 2%; or (x) 1%.

**6.** A mass spectrometer as claimed in any preceding claim, wherein an axial voltage gradient is maintained along at least a portion of the length of said ion guide (1) and wherein said axial voltage gradient varies with time whilst ions are being transmitted through said ion guide.

**7.** A mass spectrometer as claimed in any preceding claim, wherein said ion guide (1) comprises a first electrode held at a first reference potential, a second electrode held at a second reference potential, and a third electrode held at a third reference potential, wherein:

at a first time $t_1$ a first DC voltage is supplied to said first electrode so that said first electrode is held at a first potential above or below said first reference potential;
at a second later time $t_2$ a second DC voltage is supplied to said second electrode so that said second electrode is held at a second potential above or below said second reference potential; and
at a third later time $t_3$ a third DC voltage is supplied to said third electrode so that said third electrode is held at a third potential above or below said third reference potential.

**8.** A mass spectrometer as claimed in claim 7, wherein:

at said first time $t_1$ said second electrode is at said second reference potential and said third electrode is at said third reference potential;
at said second time $t_2$ said first electrode is at said first potential and said third electrode is at said third reference potential; and
at said third time $t_3$ said first electrode is at said first potential and said second electrode is at said second potential.

**9.** A mass spectrometer as claimed in claim 7, wherein:

at said first time $t_1$ said second electrode is at said second reference potential and said third electrode is at said third reference potential;
at said second time $t_2$ said first electrode is no longer supplied with said first DC voltage so that said first electrode is returned to said first reference potential and said third electrode is at said third reference potential; and
at said third time $t_3$ said first electrode is at said first reference potential and said second electrode is no longer supplied with said second DC voltage so that said second electrode is returned to said second reference potential.

**10.** A mass spectrometer as claimed in claim 7, 8 or 9, wherein said first, second and third reference potentials are substantially the same.

**11.** A mass spectrometer as claimed in any of claims 7-10, wherein said first, second and third DC voltages are substantially the same.

**12.** A mass spectrometer as claimed in any of claims 7-11, wherein said first, second and third potentials are substantially the same.

**13.** A mass spectrometer as claimed in any preceding claim, wherein said ion guide (1) comprises 3, 4, 5, 6, 7, 8, 9, 10, 11, 12, 13, 14, 15, 16, 17, 18, 19, 20, 21, 22, 23, 24, 25, 26, 27, 28, 29, 30 or >30 segments, wherein each segment comprises 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 or >30 electrodes (2) and wherein the electrodes in a segment are maintained at substantially the same DC potential.

**14.** A mass spectrometer as claimed in claim 13, wherein a plurality of segments are maintained at substantially the same DC potential.

**15.** A mass spectrometer as claimed in claim 13 or 14, wherein each segment is maintained at substantially the same DC potential as the subsequent nth segment wherein n is 3, 4, 5, 6, 7, 8, 9, 10, 11, 12, 13, 14, 15, 16, 17, 18, 19, 20, 21, 22, 23, 24, 25, 26, 27, 28, 29, 30 or >30.

**16.** A mass spectrometer as claimed in any preceding claim, wherein ions are confined radially within said ion guide (1) by an AC or RF electric field.

**17.** A mass spectrometer as claimed in any preceding claim, wherein ions are radially confined within said ion guide (1) in a pseudo-potential well and are constrained axially by a real potential barrier or well.

**18.** A mass spectrometer as claimed in any preceding claim, wherein the transit time of ions through said ion guide (1) is selected from the group consisting of: (i) less than or equal to 20 ms; (ii) less than or equal to 10 ms; (iii) less than or equal to 5 ms; (iv) less than or equal to 1 ms; and (v) less than or equal to 0.5 ms.

**19.** A mass spectrometer as claimed in any preceding claim, wherein said ion guide (1) is maintained, in use, at a pressure selected from the group consisting of: (i) greater than or equal to 0.0001 mbar; (ii) greater than or equal to 0.0005 mbar; (iii) greater than or equal to 0.001 mbar; (iv) greater than or equal to 0.005 mbar; (v) greater than or equal to 0.01 mbar; (vi) greater than or equal to 0.05 mbar; (vii) greater than or equal to 0.1 mbar; (viii) greater than or equal to 0.5 mbar; (ix) greater than or equal to 1 mbar; (x) greater than or equal to 5 mbar; and (xi) greater than or equal to 10 mbar.

**20.** A mass spectrometer as claimed in any preceding claim, wherein said ion guide (1) is maintained, in use, at a pressure selected from the group consisting of: (i) less than or equal to 10 mbar; (ii) less than or equal to 5 mbar; (iii) less than or equal to 1 mbar; (iv) less than or equal to 0.5 mbar; (v) less than or equal to 0.1 mbar; (vi) less than or equal to 0.05 mbar; (vii) less than or equal to 0.01 mbar; (viii) less than or equal to 0.005 mbar; (ix) less than or equal to 0.001 mbar; (x) less than or equal to 0.0005 mbar; and (xi) less than or equal to 0.0001 mbar.

**21.** A mass spectrometer as claimed in any preceding claim, wherein said ion guide (1) is maintained, in use, at a pressure selected from the group consisting of: (i) between 0.0001 and 10 mbar; (ii) between 0.0001 and 1 mbar; (iii) between 0.0001 and 0.1 mbar; (iv) between 0.0001 and 0.01 mbar; (v) between 0.0001 and 0.001 mbar; (vi) between 0.001 and 10 mbar; (vii) between 0.001 and 1 mbar; (viii) between 0.001 and 0.1 mbar; (ix) between 0.001 and 0.01 mbar; (x) between 0.01 and 10 mbar; (xi) between 0.01 and 1 mbar; (xii) between 0.01 and 0.1 mbar; (xiii) between 0.1 and 10 mbar; (xiv) between 0.1 and 1 mbar; and (xv) between 1 and 10 mbar.

**22.** A mass spectrometer as claimed in any preceding claim, wherein said ion guide (1) is maintained, in use, at a pressure such that a viscous drag is imposed upon ions passing through said ion guide.

**23.** A mass spectrometer as claimed in any preceding claim, wherein in use one or more transient DC voltages or one or more transient DC voltage waveforms are initially provided at a first axial position and are then subsequently provided at second, then third different axial positions along said ion guide (1).

**24.** A mass spectrometer as claimed in any preceding claim, wherein one or more transient DC voltages or one or more transient DC voltage waveforms move in use from one end of said ion guide (1) to another end of said ion guide so that ions are urged along said ion guide.

**25.** A mass spectrometer as claimed in claim 23 or 24, wherein said one or more transient DC voltages create: (i) a potential hill or barrier; (ii) a potential well; (iii) multiple potential hills or barriers; (iv) multiple potential wells; (v) a combination of a potential hill or barrier and a potential well; or (vi) a combination of multiple potential hills or barriers and multiple potential wells.

**26.** A mass spectrometer as claimed in claim 23 or 24, wherein said one or more transient DC voltage waveforms comprise a repeating waveform.

**27.** A mass spectrometer as claimed in claim 26, wherein said one or more transient DC voltage waveforms comprise a square wave.

**28.** A mass spectrometer as claimed in any of claims 23-27, wherein the amplitude of said one or more transient DC voltages or said one or more transient DC voltage waveforms remains substantially constant with time.

**29.** A mass spectrometer as claimed in any of claims 23-27, wherein the amplitude of said one or more transient DC voltages or said one or more transient DC voltage waveforms varies with time.

**30.** A mass spectrometer as claimed in claim 29, wherein the amplitude of said one or more transient DC voltages or said one or more transient DC voltage waveforms either: (i) increases with time; (ii) increases then decreases with time; (iii) decreases with time; or (iv) decreases then increases with time.

**31.** A mass spectrometer as claimed in any of claims 23-30, wherein said ion guide (1) comprises an upstream entrance region, a downstream exit region and an intermediate region, wherein:

in said entrance region the amplitude of said one or more transient DC voltages or said one or more transient DC voltage waveforms has a first amplitude;

in said intermediate region the amplitude of said one or more transient DC voltages or said one or more transient DC voltage waveforms has a second amplitude; and

in said exit region the amplitude of said one or more transient DC voltages or said one or more transient DC voltage waveforms has a third amplitude.

32. A mass spectrometer as claimed in claim 31, wherein the entrance and/or exit region comprise a proportion of the total axial length of said ion guide (1) selected from the group consisting of: (i) < 5%; (ii) 5-10%; (iii) 10-15%; (iv) 15-20%; (v) 20-25%; (vi) 25-30%; (vii) 30-35%; (viii) 35-40%; and (ix) 40-45%.

33. A mass spectrometer as claimed in claim 31 or 32, wherein said first and/or third amplitudes are substantially zero and said second amplitude is substantially non-zero.

34. A mass spectrometer as claimed in claim 31, 32 or 33, wherein said second amplitude is larger than said first amplitude and/or said second amplitude is larger than said third amplitude.

35. A mass spectrometer as claimed in any of claims 23-34, wherein said one or more transient DC voltages or said one or more transient DC voltage waveforms pass in use along said ion guide (1) with a first velocity.

36. A mass spectrometer as claimed in claim 35, wherein said first velocity: (i) remains substantially constant; (ii) varies; (iii) increases; (iv) increases then decreases; (v) decreases; (vi) decreases then increases; (vii) reduces to substantially zero; (viii) reverses direction; or (ix) reduces to substantially zero and then reverses direction.

37. A mass spectrometer as claimed in any of claims 23-36, wherein said one or more transient DC voltages or said one or more transient DC voltage waveforms cause ions within said ion guide (1) to pass along said.ion guide with a second velocity.

38. A mass spectrometer as claimed in claim 37, wherein the difference between said first velocity and said second velocity is less than or equal to 100 m/s, 90 m/s, 80 m/s, 70 m/s, 60 m/s, 50 m/s, 40 m/s, 30 m/s, 20 m/s, 10 m/s, 5 m/s or 1 m/s.

39. A mass spectrometer as claimed in any of claims 35-38, wherein said first velocity is selected from the group consisting of: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s; and (xii) 2750-3000 m/s.

40. A mass spectrometer as claimed in claim 37, 38 or 39, wherein said second velocity is selected from the group consisting of: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s; and (xii) 2750-3000 m/s.

41. A mass spectrometer as claimed in claim 37, wherein said second velocity is substantially the same as said first velocity.

42. A mass spectrometer as claimed in any of claims 23-41, wherein said one or more transient DC voltages or said one or more transient DC voltage waveforms have a frequency, and wherein said frequency: (i) remains substantially constant; (ii) varies; (iii) increases; (iv) increases then decreases; (v) decreases; or (vi) decreases then increases.

43. A mass spectrometer as claimed in any of claims 23-42, wherein said one or more transient DC voltages or said one or more transient DC voltage waveforms have a wavelength, and wherein said wavelength: (i) remains substantially constant; (ii) varies; (iii) increases; (iv) increases then decreases; (v) decreases; or (vi) decreases then increases.

44. A mass spectrometer as claimed in any of claims 23-43, wherein two or more transient DC voltages or two or more transient DC voltage waveforms are arranged to move: (i) in the same direction; (ii) in opposite directions; (iii) towards each other; (iv) away from each other.

45. A mass spectrometer as claimed in any of claims 23-44, wherein said one or more transient DC voltages or said one or more transient DC voltage waveforms are repeatedly generated and passed in use along said ion guide, and wherein the frequency of generating said one or more transient DC voltages or said one or more transient DC voltage waveforms: (i) remains substantially constant; (ii) varies; (iii) increases; (iv) increases then decreases; (v) decreases; or (vi) decreases then increases.

46. A mass spectrometer as claimed in any of claims 23-45, wherein said one or more transient DC voltages or said one or more transient DC voltage waveforms has a wavelength which remains substantially the same and a frequency which decreases with time so that the velocity of said one or more transient DC voltages or said one or more transient DC voltages decreases with time.

**47.** A mass spectrometer as claimed in any preceding claim, wherein in use pulses of ions (4) emerge from an exit of said ion guide (1).

**48.** A mass spectrometer as claimed in claim 47, further comprising an ion detector (17), said ion detector being arranged to be substantially phase locked in use with the pulses of ions emerging from the exit of the ion guide (1).

**49.** A mass spectrometer as claimed in claim 47 or 48, further comprising a Time of Flight mass analyser (15) comprising an electrode (14) for injecting ions into a drift region, said electrode being arranged to be energised in use in a substantially synchronised manner with the pulses of ions emerging from the exit of the ion guide (1).

**50.** A mass spectrometer as claimed in claim 47, 48 or 49, further comprising an ion trap arranged downstream of said ion guide, said ion trap being arranged to store and/or release ions from said ion trap in a substantially synchronised manner with the pulses of ions emerging from the exit of the ion guide (1).

**51.** A mass spectrometer as claimed in any of claims 47-50, further comprising a mass filter arranged downstream of said ion guide (1), wherein a mass to charge ratio transmission window of said mass filter is varied in a substantially synchronised manner with the pulses of ions emerging from the exit of the ion guide.

**52.** A mass spectrometer as claimed in any preceding claim, wherein said ion guide (1) is selected from the group consisting of: (i) an ion funnel comprising a plurality of electrodes having apertures therein through which ions are transmitted, wherein the diameter of said apertures becomes progressively smaller or larger; (ii) an ion tunnel comprising a plurality of electrodes (2) having apertures therein through which ions are transmitted, wherein the diameter of said apertures remains substantially constant; and (iii) a stack of plate, ring or wire loop electrodes.

**53.** A mass spectrometer as claimed in any preceding claim, wherein said ion guide (1) comprises a plurality of electrodes (2), each electrode having an aperture through which ions are transmitted in use.

**54.** A mass spectrometer as claimed in any preceding claim, wherein each electrode (2) has a substantially circular aperture.

**55.** A mass spectrometer as claimed in any preceding claim, wherein each electrode (2) has a single aperture through which ions are transmitted in use.

**56.** A mass spectrometer as claimed in claim 53, 54 or 55, wherein the diameter of the apertures of at least 50%, 60%, 70%, 80%, 90% or 95% of the electrodes (2) forming said ion guide (1) is selected from the group consisting of: (i) less than or equal to 10 mm; (ii) less than or equal to 9 mm; (iii) less than or equal to 8 mm; (iv) less than or equal to 7 mm; (v) less than or equal to 6 mm; (vi) less than or equal to 5 mm; (vii) less than or equal to 4 mm; (viii) less than or equal to 3 mm; (ix) less than or equal to 2 mm; and (x) less than or equal to 1 mm.

**57.** A mass spectrometer as claimed in any preceding claim, wherein at least 50%, 60%, 70%, 80%, 90% or 95% of the electrodes (2) forming the ion guide (1) have apertures which are substantially the same size or area.

**58.** A mass spectrometer as claimed in any of claims 1-51, wherein said ion guide (1) comprises a segmented rod set.

**59.** A mass spectrometer as claimed in any preceding claim, wherein said ion guide (1) consists of: (i) 10-20 electrodes; (ii) 20-30 electrodes; (iii) 30-40 electrodes; (iv) 40-50 electrodes; (v) 50-60 electrodes; (vi) 60-70 electrodes; (vii) 70-80 electrodes; (viii) 80-90 electrodes; (ix) 90-100 electrodes; (x) 100-110 electrodes; (xi) 110-120 electrodes; (xii) 120-130 electrodes; (xiii) 130-140 electrodes; (xiv) 140-150 electrodes; or (xv) more than 150 electrodes.

**60.** A mass spectrometer as claimed in any preceding claim, wherein the thickness of at least 50%, 60%, 70%, 80%, 90% or 95% of said electrodes (2) is selected from the group consisting of: (i) less than or equal to 3 mm; (ii) less than or equal to 2.5 mm; (iii) less than or equal to 2.0 mm; (iv) less than or equal to 1.5 mm; (v) less than or equal to 1.0 mm; and (vi) less than or equal to 0.5 mm.

**61.** A mass spectrometer as claimed in any preceding claim, wherein said ion guide (1) has a length selected from the group consisting of: (i) less than 5 cm; (ii) 5-10 cm; (iii) 10-15 cm; (iv) 15-20 cm; (v) 20-25 cm; (vi) 25-30 cm; and (vii) greater than 30 cm.

**62.** A mass spectrometer as claimed in any preceding claim, wherein at least 10%, 20%, 30%, 40%, 50%, 60%, 70%, 80%, 90% or 95% of said electrodes (2) are connected to both a DC and an AC or RF voltage supply.

**63.** A mass spectrometer as claimed in any preceding claim, wherein axially adjacent electrodes (2) are supplied with AC or RF voltages having a phase difference of 180°.

**64.** A mass spectrometer as claimed in any preceding claim, further comprising an ion source selected from the group consisting of: (i) Electrospray ("ESI") ion source; (ii) Atmospheric Pressure Chemical Ionisation ("APCI") ion source; (iii) Atmospheric Pressure Photo Ionisation ("APPI") ion source; (iv) Matrix Assisted Laser Desorption Ionisation ("MALDI") ion source; (v) Laser Desorption Ionisation ("LDI") ion source; (vi) Inductively Coupled Plasma ("ICP") ion source; (vii) Electron Impact ("EI") ion source; (viii) Chemical Ionisation ("CI") ion source; (ix) a Fast Atom Bombardment ("FAB") ion source; and (x) a Liquid Secondary Ions Mass Spectrometry ("LSIMS") ion source.

**65.** A mass spectrometer as claimed in any of claims 1-64, further comprising a continuous ion source.

**66.** A mass spectrometer as claimed in any of claims 1-64, further comprising a pulsed ion source (10,11).

**67.** A mass spectrometer as claimed in any preceding claim, wherein a DC potential waveform is applied to said electrodes (2) and wherein the velocity of said DC potential waveform becomes progressively slower.

**68.** A mass spectrometer as claimed in claim 67, wherein the ions in a pulse of ions emitted from the ion guide (1) have substantially the same energy or similar energies.

**69.** A mass spectrometer as claimed in claim 67 or 68, wherein the ions from a plurality of pulses of ions emitted from the ion guide (1) have substantially the same energy or similar energies.

**70.** A mass spectrometer as claimed in any preceding claim, further comprising a mass analyser (15) for mass analysing the ions exiting the ion guide (1).

**71.** A mass spectrometer as claimed in claim 70, further comprising an acceleration region for accelerating the ions exiting the ion guide (1) through a constant voltage difference prior to entering said mass analyser (15).

**72.** A mass spectrometer as claimed in claim 70 or 71, wherein said mass analyser (15) comprises an orthogonal acceleration Time of Flight mass analyser.

**73.** A mass spectrometer as claimed in claim 72, wherein said orthogonal acceleration Time of Flight mass analyser (15) further comprises an electrode (14), wherein in use said electrode is energised after a delay time after ions are released from said ion guide.

**74.** A mass spectrometer as claimed in claim 73, wherein said delay time is progressively increased, decreased or varied.

**75.** A mass spectrometer as claimed in claim 74, wherein said delay time is increased or decreased substantially linearly, in a regular manner or according to a predetermined manner.

**76.** A method of mass spectrometry comprising:

releasing a first group ions having mass to charge ratios within a first range from a mass to charge ratio selective ion trap;
receiving at least some of the ions of said first group in an ion guide (1) comprising a plurality of electrodes (2);
providing a first trapping region within said ion guide (1) so that at least some of the ions of said first group are trapped within said first trapping region;
releasing a second group of ions having mass to charge ratios within a second range from said mass to charge ratio selective ion trap;
receiving at least some of the ions of said second group in said ion guide (1);
providing a second different trapping region within said ion guide (1) so that at least some of the ions of said second group are trapped within said second trapping region;
translating at least said first and second trapping regions along at least a portion of the length of said ion guide (1), wherein one or more transient DC voltages or one or more transient DC voltage waveforms are progressively applied to said electrodes (2) so that said first and second trapping regions move along said ion guide (1).

**Patentansprüche**

**1.** Massenspektrometer, das Folgendes umfasst:

eine für das Masse-Ladungs-Verhältnis selektive Ionenfalle, die bei Gebrauch mindestens eine erste Gruppe von Ionen mit Masse-Ladungs-Verhältnissen in einem ersten Bereich freisetzt und dann mindestens eine zweite Gruppe von Ionen mit Masse-Ladungs-Verhältnissen in einem zweiten Bereich freisetzt;
eine Ionenführung (1), die eine Mehrzahl von Elektroden (2) umfasst, die so ausgelegt sind, dass sie mindestens einige der ersten Gruppe von Ionen und mindestens einige der zweiten Gruppe von Ionen empfangen;
Mittel, die dahingehend ausgelegt und adaptiert sind, entlang mindestens einem Abschnitt der Länge der Ionenführung mehrere Einfanggebiete zu generieren oder zu erzeugen, wobei mindestens einige der Ionen der ersten Gruppe in einem Einfanggebiet eingefangen werden und mindestens einige Ionen der zweiten Gruppe in einem zweiten, verschiedenen Einfanggebiet eingefangen werden; und

Mittel, die dahingehend ausgelegt und adaptiert sind, die mehreren Einfanggebiete entlang mindestens einem Abschnitt der Länge der Ionenführung (1) parallel zu verschieben, wobei eine oder mehrere instationäre Gleichspannungen oder eine oder mehrere instationäre Gleichspannungswellenformen progressiv an die Elektroden (2) angelegt werden, so dass sich die mehreren Einfanggebiete entlang der Ionenführung (1) bewegen.

2. Massenspektrometer nach Anspruch 1, wobei die für das Masse-Ladungs-Verhältnis selektive Ionenfalle ausgewählt ist aus der Gruppe bestehend aus: (i) einer 2D-(linearen) Quadrupolionenfalle; (ii) einer 3D-Quadrupolionenfalle und (iii) einer Penning-Ionenfalle.

3. Massenspektrometer nach Anspruch 1 oder 2, wobei mindestens eine Majorität der in dem ersten Einfanggebiet eingefangenen Ionen im Wesentlichen das gleiche Masse-Ladungs-Verhältnis aufweist und/oder mindestens eine Majorität der in dem zweiten Einfanggebiet eingefangenen Ionen im Wesentlichen das gleiche Masse-Ladungs-verhältnis aufweist.

4. Massenspektrometer nach Anspruch 1, 2 oder 3, wobei mindestens eine Majorität der in dem ersten Einfanggebiet eingefangenen Ionen Masse-Ladungs-Verhältnisse aufweist, die um weniger als x Masse-Ladungs-Verhältniseinheiten differieren, und/oder mindestens eine Majorität der in dem zweiten Einfanggebiet eingefangenen Ionen Masse-Ladungs-Verhältnisse aufweist, die um weniger als x Masse-Ladungs-Verhältniseinheiten differieren, wobei x ausgewählt ist aus der Gruppe bestehend aus: (i) 500; (ii) 450; (iii) 400; (iv) 350; (v) 300; (vi) 250; (vii) 200; (viii) 150; (ix) 100; (x) 90; (xi) 80; (xii) 70; (xiii) 60; (xiv) 50; (xv) 40; (xvi) 30; (xvii) 20; (xviii) 10 und (xix) 5.

5. Massenspektrometer nach einem vorhergehenden Anspruch, wobei mindestens eine Majorität der in dem ersten Einfanggebiet eingefangenen Ionen und/oder mindestens eine Majorität der in dem zweiten Einfanggebiet eingefangenen Ionen Masse-Ladungs-Verhältnisse aufweisen, die um weniger als: (i) 30%; (ii) 25%; (iii) 20%; (iv) 15%; (v) 10%; (vi) 5%; (vii) 4%; (viii) 3%; (ix) 2% oder (x) 1% differieren.

6. Massenspektrometer nach einem vorhergehenden Anspruch, wobei ein axialer Spannungsgradient entlang mindestens einem Abschnitt der Länge der Ionenführung (1) aufrechterhalten wird und wobei der axiale Spannungsgradient mit der Zeit variiert, während Ionen durch die Ionenführung übertragen werden.

7. Massenspektrometer nach einem vorhergehenden Anspruch, wobei die Ionenführung (1) eine auf einem ersten Referenzpotential gehaltene erste Elektrode, eine auf einem zweiten Referenzpotential gehaltene zweite Elektrode und eine auf einem dritten Referenzpotential gehaltene dritte Elektrode umfasst, wobei:

zu einem ersten Zeitpunkt $t_1$ eine erste Gleichspannung der ersten Elektrode geliefert wird, so dass die erste Elektrode auf einem ersten Potential über oder unter dem ersten Referenzpotential gehalten wird;

zu einem zweiten späteren Zeitpunkt $t_2$ eine zweite Gleichspannung der zweiten Elektrode geliefert wird, so dass die zweite Elektrode auf einem zweiten Potential über oder unter dem zweiten Referenzpotential gehalten wird; und

zu einem dritten späteren Zeitpunkt $t_3$ eine dritte Gleichspannung der dritten Elektrode geliefert wird, so dass die dritte Elektrode auf einem dritten Potential über oder unter dem dritten Referenzpotential gehalten wird.

8. Massenspektrometer nach Anspruch 7, wobei:

bei dem ersten zeitpunkt $t_1$ die zweite Elektrode auf dem zweiten Referenzpotential ist und die dritte Elektrode auf dem dritten Referenzpotential ist;

bei dem zweiten Zeitpunkt $t_2$ die erste Elektrode auf dem ersten Potential ist und die dritte Elektrode auf dem dritten Referenzpotential ist und bei dem dritten Zeitpunkt $t_3$ die erste Elektrode auf dem ersten Potential ist und die zweite Elektrode auf dem zweiten Potential ist.

9. Massenspektrometer nach Anspruch 7, wobei:

zu dem ersten Zeitpunkt $t_1$ die zweite Elektrode auf dem zweiten Referenzpotential ist und die dritte Elektrode auf dem dritten Referenzpotential ist;

bei dem zweiten Zeitpunkt $t_2$ die erste Elektrode nicht länger mit der ersten Gleichspannung versorgt wird, so dass die erste Elektrode auf das erste Referenzpotential zurückgeführt wird und die dritte Elektrode auf dem dritten Referenzpotential ist; und

bei dem dritten Zeitpunkt $t_3$ die erste Elektrode

auf dem ersten Referenzpotential ist und die zweite Elektrode nicht länger mit der zweiten Gleichspannung versorgt wird, so dass die zweite Elektrode auf das zweite Referenzpotential zurückgeführt wird.

10. Massenspektrometer nach Anspruch 7, 8 oder 9, wobei das erste, zweite und dritte Referenzpotential im Wesentlichen gleich sind.

11. Massenspektrometer nach einem der Ansprüche 7-10, wobei die erste, zweite und dritte Gleichspannung im Wesentlichen gleich sind.

12. Massenspektrometer nach einem der Ansprüche 7-11, wobei das erste, zweite und dritte Potential im Wesentlichen gleich sind.

13. Massenspektrometer nach einem vorhergehenden Anspruch, wobei die Ionenführung (1) 3, 4, 5, 6, 7, 8, 9, 10, 11, 12, 13, 14, 15, 16, 17, 18, 19, 20, 21, 22, 23, 24, 25, 26, 27, 28, 29, 30 oder > 30 Segmente umfasst,
wobei jedes Segment 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 oder > 30 Elektroden (2) umfasst und wobei die Elektroden in einem Segment auf im Wesentlichen dem gleichen Gleichstrompotential gehalten werden.

14. Massenspektrometer nach Anspruch 13, wobei mehrere Segmente auf im Wesentlichen dem gleichen Gleichstrompotential gehalten werden.

15. Massenspektrometer nach Anspruch 13 oder 14, wobei jedes Segment auf im Wesentlichen dem gleichen Gleichstrompotential wie das nachfolgende n-te Segment gehalten wird, wobei n 3, 4, 5, 6, 7, 8, 9, 10, 11, 12, 13, 14, 15, 16, 17, 18, 19, 20, 21, 22, 23, 24, 25, 26, 27, 28, 29, 30 oder > 30 ist.

16. Massenspektrometer nach einem vorhergehenden Anspruch, wobei Ionen durch ein elektrisches Wechselstrom- oder HF-Feld radial in der Ionenführung (1) eingeschlossen sind.

17. Massenspektrometer nach einem vorhergehenden Anspruch, wobei Ionen in einer Pseudopotentialmulde radial in der Ionenführung (1) eingeschlossen sind und durch eine reale Potentialbarriere oder -mulde axial eingeschränkt sind.

18. Massenspektrometer nach einem vorhergehenden Anspruch, wobei die Laufzeit von Ionen durch die Ionenführung (1) ausgewählt ist aus der Gruppe bestehend aus: (i) kleiner oder gleich 20 ms; (ii) kleiner oder gleich 10 ms; (iii) kleiner oder gleich 5 ms; (iv) kleiner oder gleich 1 ms und (v) kleiner oder gleich 0,5 ms.

19. Massenspektrometer nach einem vorhergehenden Anspruch, wobei die Ionenführung (1) bei Gebrauch auf einem Druck gehalten wird ausgewählt aus der Gruppe bestehend aus: (i) größer oder gleich 0,0001 mbar; (ii) größer oder gleich 0,0005 mbar; (iii) größer oder gleich 0,001 mbar; (iv) größer oder gleich 0,005 mbar; (v) größer oder gleich 0,01 mbar; (vi) größer oder gleich 0,05 mbar; (vii) größer oder gleich 0,1 mbar; (viii) größer oder gleich 0,5 mbar; (ix) größer oder gleich 1 mbar; (x) größer oder gleich 5 mbar und (xi) größer oder gleich 10 mbar.

20. Massenspektrometer nach einem vorhergehenden Anspruch, wobei die Ionenführung (1) bei Gebrauch auf einem Druck gehalten wird ausgewählt aus der Gruppe bestehend aus: (i) kleiner oder gleich 10 mbar; (ii) kleiner oder gleich 5 mbar; (iii) kleiner oder gleich 1 mbar; (iv) kleiner oder gleich 0, 5 mbar; (v) kleiner oder gleich 0,1 mbar; (vi) kleiner oder gleich 0,05 mbar; (vii) kleiner oder gleich 0,01 mbar; (viii) kleiner oder gleich 0,005 mbar; (ix) kleiner oder gleich 0,001 mbar; (x) kleiner oder gleich 0,0005 mbar und (xi) kleiner oder gleich 0,0001 mbar.

21. Massenspektrometer nach einem vorhergehenden Anspruch, wobei die Ionenführung (1) bei Gebrauch auf einem Druck gehalten wird ausgewählt aus der Gruppe bestehend aus: (i) zwischen 0,0001 und 10 mbar; (ii) zwischen 0,0001 und 1 mbar; (iii) zwischen 0,0001 und 0,1 mbar; (iv) zwischen 0,0001 und 0,01 mbar; (v) zwischen 0,0001 und 0,001 mbar; (vi) zwischen 0,001 und 10 mbar; (vii) zwischen 0,001 und 1 mbar; (viii) zwischen 0,001 und 0,1 mbar; (ix) zwischen 0,001 und 0,01 mbar; (x) zwischen 0,01 und 10 mbar; (xi) zwischen 0,01 und 1 mbar; (xii) zwischen 0,01 und 0,1 mbar; (xiii) zwischen 0,1 und 10 mbar; (xiv) zwischen 0,1 und 1 mbar; und (xv) zwischen 1 und 10 mbar.

22. Massenspektrometer nach einem vorhergehenden Anspruch, wobei die Ionenführung (1) bei Gebrauch auf einem Druck derart gehalten wird, dass durch die Ionenführung hindurchtretenden Ionen ein Reibungswiderstand auferlegt wird.

23. Massenspektrometer nach einem vorhergehenden Anspruch, wobei bei Gebrauch eine oder mehrere instationäre Gleichspannungen oder eine oder mehrere instationäre Gleichspannungswellenformen anfänglich an einer ersten axialen Position bereitgestellt werden und dann danach an einer zweiten, dann dritten, verschiedenen axialen Position entlang der Ionenführung (1) bereitgestellt werden.

24. Massenspektrometer nach einem vorhergehenden Anspruch, wobei eine oder mehrere instationäre Gleichspannungen oder eine oder mehrere instationäre Gleichspannungswellenformen sich bei Gebrauch von einem Ende der Ionenführung (1) zu einem anderen Ende der Ionenführung bewegen, so dass Ionen entlang der Ionenführung gezwungen werden.

25. Massenspektrometer nach Anspruch 23 oder 24, wobei die eine oder die mehreren instationären Gleichspannungen Folgendes erzeugen: (i) einen Potentialhügel oder eine Potentialbarriere; (ii) eine Potentialmulde; (iii) mehrere Potentialhügel oder -barrieren; (iv) mehrere Potentialmulden; (v) eine Kombination aus Potentialhügel oder -barriere und einer Potentialmulde oder (vi) eine Kombination aus mehreren Potentialhügeln oder -barrieren und mehreren Potentialmulden.

26. Massenspektrometer nach Anspruch 23 oder 24, wobei die eine oder die mehreren instationären Gleichspannungswellenformen eine sich wiederholende Wellenform umfassen.

27. Massenspektrometer nach Anspruch 26, wobei die eine oder die mehreren instationären Gleichspannungswellenformen eine Rechteckwelle umfassen.

28. Massenspektrometer nach einem der Ansprüche 23-27, wobei die Amplitude der einen oder der mehreren instationären Gleichspannungen oder der einen oder mehreren instationären Gleichspannungswellenformen mit der Zeit im Wesentlichen konstant bleibt.

29. Massenspektrometer nach einem der Ansprüche 23-27, wobei die Amplitude der einen oder der mehreren instationären Gleichspannungen oder der einen oder mehreren instationären Gleichspannungswellenformen mit der zeit variiert.

30. Massenspektrometer nach Anspruch 29, wobei die Amplitude der einen oder der mehreren instationären Gleichspannungen oder der einen oder der mehreren instationären Gleichspannungswellenformen entweder: (i) mit der zeit zunimmt; (ii) zunimmt und dann mit der Zeit abnimmt; (iii) mit der zeit abnimmt oder (iv) abnimmt und dann mit der Zeit zunimmt.

31. Massenspektrometer nach einem der Ansprüche 23-30, wobei die Ionenführung (1) ein vorgeschaltetes Eintrittsgebiet, ein nachgeschaltetes Austrittsgebiet und ein Zwischengebiet umfasst, wobei:

in dem Eintrittsgebiet die Amplitude der einen oder der mehreren instationären Gleichspannungen oder der einen oder der mehreren instationären Gleichspannungswellenformen eine erste Amplitude aufweist;

in dem Zwischengebiet die Amplitude der einen oder der mehreren instationären Gleichspannungen oder der einen oder der mehreren instationären Gleichspannungswellenformen eine zweite Amplitude aufweist; und
in dem Austrittsgebiet die Amplitude der einen oder der mehreren instationären Gleichspannungen oder der einen oder der mehreren instationären Gleichspannungswellenformen eine dritte Amplitude aufweist.

32. Massenspektrometer nach Anspruch 31, wobei das Eintritts- und/oder Austrittsgebiet einen Abschnitt der gesamten axialen Länge der Ionenführung (1) umfasst/umfassen ausgewählt aus der Gruppe bestehend aus: (i) < 5%; (ii) 5-10%; (iii) 10-15%; (iv) 15-20%; (v) 20-25%; (vi) 25-30%; (vii) 30-35%; (viii) 35-40% und (ix) 40-45%.

33. Massenspektrometer nach Anspruch 31 oder 32, wobei die erste und/oder dritte Amplitude im Wesentlichen null sind und die zweite Amplitude im Wesentlichen von null verschieden ist.

34. Massenspektrometer nach Anspruch 31, 32 oder 33, wobei die zweite Amplitude größer ist als die erste Amplitude und/oder die zweite Amplitude größer ist als die dritte Amplitude.

35. Massenspektrometer nach einem der Ansprüche 23-34, wobei die eine oder die mehreren instationären Gleichspannungen oder die eine oder die mehreren instationären Gleichspannungswellenformen bei Gebrauch mit einer ersten Geschwindigkeit entlang der Ionenführung (1) laufen.

36. Massenspektrometer nach Anspruch 35, wobei die erste Geschwindigkeit: (i) im wesentlichen konstant bleibt; (ii) variiert; (iii) zunimmt; (iv) zunimmt und dann abnimmt; (v) abnimmt; (vi) abnimmt und dann zunimmt; (vii) auf im Wesentlichen null sinkt; (viii) die Richtung umkehrt oder (ix) auf im Wesentlichen null sinkt und dann die Richtung umkehrt.

37. Massenspektrometer nach einem der Ansprüche 23-36, wobei die eine oder die mehreren instationären Gleichspannungen oder die eine oder die mehreren instationären Gleichspannungswellenformen bewirken, dass Ionen in der Ionenführung (1) mit einer zweiten Geschwindigkeit entlang der Ionenführung laufen.

38. Massenspektrometer nach Anspruch 37, wobei die Differenz zwischen der ersten Geschwindigkeit und der zweiten Geschwindigkeit kleiner oder gleich 100 m/s, 90 m/s, 80 m/s, 70 m/s, 60 m/s, 50 m/s, 40 m/s, 30 m/s, 20 m/s, 10 m/s, 5 m/s oder 1 m/s ist.

**39.** Massenspektrometer nach einem der Ansprüche 35-38, wobei die erste Geschwindigkeit ausgewählt ist aus der Gruppe bestehend aus: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s und (xii) 2750-3000 m/s.

**40.** Massenspektrometer nach Anspruch 37, 38 oder 39, wobei die zweite Geschwindigkeit ausgewählt ist aus der Gruppe bestehend aus: (i) 10-250 m/s; (ii) 250-500 m/s; (iii) 500-750 m/s; (iv) 750-1000 m/s; (v) 1000-1250 m/s; (vi) 1250-1500 m/s; (vii) 1500-1750 m/s; (viii) 1750-2000 m/s; (ix) 2000-2250 m/s; (x) 2250-2500 m/s; (xi) 2500-2750 m/s und (xii) 2750-3000 m/s.

**41.** Massenspektrometer nach Anspruch 37, wobei die zweite Geschwindigkeit im Wesentlichen gleich der ersten Geschwindigkeit ist.

**42.** Massenspektrometer nach einem der Ansprüche 23-41, wobei die eine oder die mehreren instationären Gleichspannungen oder die eine oder die mehreren instationären Gleichspannungswellenformen eine Frequenz aufweisen und wobei die Frequenz: (i) im Wesentlichen konstant bleibt; (ii) variiert; (iii) zunimmt; (iv) zunimmt und dann abnimmt; (v) abnimmt oder (vi) abnimmt und dann zunimmt.

**43.** Massenspektrometer nach einem der Ansprüche 23-42, wobei die eine oder die mehreren instationären Gleichspannungen oder die eine oder die mehreren instationären Gleichspannungswellenformen eine Wellenlänge aufweisen und wobei die Wellenlänge: (i) im Wesentlichen konstant bleibt; (ii) variiert; (iii) zunimmt; (iv) zunimmt und dann abnimmt; (v) abnimmt oder (vi) abnimmt und dann zunimmt.

**44.** Massenspektrometer nach einem der Ansprüche 23-43, wobei zwei oder mehr instationäre Gleichspannungen oder zwei oder mehr instationäre Gleichspannungswellenformen so ausgelegt sind, dass sie sich wie folgt bewegen: (i) in der gleichen Richtung; (ii) in entgegengesetzten Richtungen; (iii) aufeinander zu; (iv) voneinander weg.

**45.** Massenspektrometer nach einem der Ansprüche 23-44, wobei die eine oder die mehreren instationären Gleichspannungen oder die eine oder mehreren instationären Gleichspannungswellenformen wiederholt generiert werden und bei Gebrauch entlang der Ionenführung geschickt werden und wobei die Frequenz des Generierens der einen oder der mehreren instationären Gleichspannungen oder der einen oder der mehreren instationären Gleichspannungswellenformen: (i) im Wesentlichen konstant bleibt; (ii) variiert; (iii) zunimmt; (iv) zunimmt und dann abnimmt; (v) abnimmt oder (vi) abnimmt und dann zunimmt.

**46.** Massenspektrometer nach einem der Ansprüche 23-45, wobei die eine oder die mehreren instationären Gleichspannungen oder die eine oder die mehreren instationären Gleichspannungswellenformen eine Wellenlänge aufweisen, die im Wesentlichen gleich bleibt, und eine Frequenz, die mit der Zeit abnimmt, so dass die Geschwindigkeit der einen oder der mehreren instationären Gleichspannungen oder der einen oder der mehreren instationären Gleichspannungswellenformen mit der Zeit abnimmt.

**47.** Massenspektrometer nach einem vorhergehenden Anspruch, wobei bei Gebrauch Impulse von Ionen (4) aus einem Ausgang der Ionenführung (1) herauskommen.

**48.** Massenspektrometer nach Anspruch 47, weiterhin umfassend einen Ionendetektor (17), wobei der Ionendetektor so ausgelegt ist, dass er bei Gebrauch mit den aus dem Ausgang der Ionenführung (1) herauskommenden Impulsen von Ionen im Wesentlichen phasensynchronisiert ist.

**49.** Massenspektrometer nach Anspruch 47 oder 48, weiterhin umfassend einen Flugzeit-Massenanalysator (15), der eine Elektrode (14) zum Injizieren von Ionen in ein Driftgebiet umfasst, wobei die Elektrode so ausgelegt ist, dass sie bei Gebrauch auf im Wesentlichen synchronisierte Weise mit den aus dem Ausgang der Ionenführung (1) herauskommenden Ionen bestromt wird.

**50.** Massenspektrometer nach Anspruch 47, 48 oder 49, weiterhin umfassend eine hinter der Ionenführung angeordnete Ionenfalle, wobei die Ionenfalle so ausgelegt ist, dass sie auf im Wesentlichen synchronisierte Weise mit den aus dem Ausgang der Ionenführung (1) herauskommenden Impulsen von Ionen Ionen in der Ionenfalle speichert und/oder daraus freigibt.

**51.** Massenspektrometer nach einem der Ansprüche 47-50, weiterhin umfassend einen hinter der Ionenführung (1) angeordneten Massenfilter, wobei ein Masse- Ladungs- Verhältnis- Übertragungsfenster des Massenfilters auf im Wesentlichen synchronisierte Weise mit den aus dem Ausgang der Ionenführung herauskommenden Impulsen von Ionen variiert wird.

**52.** Massenspektrometer nach einem vorhergehenden Anspruch, wobei die Ionenführung (1) ausgewählt ist aus der Gruppe bestehend aus: (i) einem Ionentrichter, der mehrere Elektroden mit Öffnungen darin umfasst, durch die Ionen übertragen werden, wobei der Durchmesser der Öffnungen progressiv kleiner oder größer wird; (ii) einem Ionentunnel, der mehrere Elektroden (2) mit Öffnungen darin umfasst, durch die Ionen übertragen werden, wobei der Durchmesser der Öffnungen im Wesentlichen konstant bleibt; und (iii) einem Stapel aus Platten-, Ring- oder Drahtschleifenelektroden.

53. Massenspektrometer nach einem vorhergehenden Anspruch, wobei die Ionenführung (1) mehrere Elektroden (2) umfasst, wobei jede Elektrode eine Öffnung aufweist, durch die bei Gebrauch Ionen übertragen werden.

54. Massenspektrometer nach einem vorhergehenden Anspruch, wobei jede Elektrode (2) eine im Wesentlichen kreisförmige Öffnung aufweist.

55. Massenspektrometer nach einem vorhergehenden Anspruch, wobei jede Elektrode (2) eine einzelne Öffnung aufweist, durch die bei Gebrauch Ionen übertragen werden.

56. Massenspektrometer nach Anspruch 53, 54 oder 55, wobei der Durchmesser der Öffnungen von mindestens 50%, 60%, 70%, 80%, 90% oder 95% der die Ionenführung (1) bildenden Elektroden (2) ausgewählt ist aus der Gruppe bestehend aus: (i) kleiner oder gleich 10 mm; (ii) kleiner oder gleich 9 mm; (iii) kleiner oder gleich 8 mm; (iv) kleiner oder gleich 7 mm; (v) kleiner oder gleich 6 mm; (vi) kleiner oder gleich 5 mm; (vii) kleiner oder gleich 4 mm; (viii) kleiner oder gleich 3 mm; (ix) kleiner oder gleich 2 mm und (x) kleiner oder gleich 1 mm.

57. Massenspektrometer nach einem vorhergehenden Anspruch, wobei mindestens 50%, 60%, 70%, 80%, 90% oder 95% der die Ionenführung (1) bildenden Elektroden (2) Öffnungen aufweisen, die im Wesentlichen die gleiche Größe oder Fläche besitzen.

58. Massenspektrometer nach einem der Ansprüche 1-51, wobei die Ionenführung (1) einen segmentierten Stabsatz umfasst.

59. Massenspektrometer nach einem vorhergehenden Anspruch, wobei die Ionenführung (1) aus: (i) 10-20 Elektroden; (ii) 20-30 Elektroden; (iii) 30-40 Elektroden; (iv) 40-50 Elektroden; (v) 50-60 Elektroden; (vi) 60-70 Elektroden; (vii) 70-80 Elektroden; (viii) 80-90 Elektroden; (ix) 90-100 Elektroden; (x) 100-110 Elektroden; (xi) 110-120 Elektroden; (xii) 120-130 Elektroden; (xiii) 130-140 Elektroden; (xiv) 140-150 Elektroden oder (xv) mehr als 150 Elektroden besteht.

60. Massenspektrometer nach einem vorhergehenden Anspruch, wobei die Dicke von mindestens 50%, 60%, 70%, 80%, 90% oder 95% der Elektroden (2) ausgewählt ist aus der Gruppe bestehend aus: (i) kleiner oder gleich 3 mm; (ii) kleiner oder gleich 2,5 mm; (iii) kleiner oder gleich 2,0 mm; (iv) kleiner oder gleich 1,5 mm; (v) kleiner oder gleich 1,0 mm und (vi) kleiner oder gleich 0,5 mm.

61. Massenspektrometer nach einem vorhergehenden Anspruch, wobei die Ionenführung (1) eine Länge aufweist ausgewählt aus der Gruppe bestehend aus: (i) kleiner als 5 cm; (ii) 5-10 cm; (iii) 10-15 cm; (iv) 15-20 cm; (v) 20-25 cm; (vi) 25-30 cm und (vii) größer als 30 cm.

62. Massenspektrometer nach einem vorhergehenden Anspruch, wobei mindestens 10%, 20%, 30%, 40%, 50%, 60%, 70%, 80%, 90% oder 95% der Elektroden (2) sowohl an eine Gleich- als auch eine Wechseloder HF-Spannungsversorgung angeschlossen sind.

63. Massenspektrometer nach einem vorhergehenden Anspruch, wobei axial benachbarte Elektroden (2) mit Wechsel- oder HF-Spannungen mit einer Phasendifferenz von 180° versorgt werden.

64. Massenspektrometer nach einem vorhergehenden Anspruch, weiterhin umfassend eine Ionenquelle ausgewählt aus der Gruppe bestehend aus: (i) Elektrospray-Ionenquelle ("ESI"); (ii) APCI-Ionenquelle (Atmospheric Pressure Chemical Ionisation - chemische Ionisation bei Atmosphärendruck); (iii) APPI-Ionenquelle (Atmospheric Pressure Photo Ionisation - Photoionisation bei Atmosphärendruck); (iv) MALDI-Ionenquelle (Matrix Assisted Laser Desorption Ionisation - matrixunterstützte Laserdesorptionionisation); (v) LDI-Ionenquelle (Laser Desorption Ionisation - Laserdesorptionionisation); (vi) ICP-Ionenquelle (Inductively Coupled Plasma - induktiv gekoppeltes Plasma); (vii) EI-Ionenquelle (Electron Impact - Elektronenstoß); (viii) CI-Ionenquelle (Chemical Ionisation - chemische Ionisation); (ix) einer FAB-Ionenquelle (Fast Atom Bombardment) und (x) einer LSIMS-Ionenquelle (Liquid Secondary Ions Mass Spectrometry).

65. Massenspektrometer nach einem der Ansprüche 1-64, weiterhin umfassend eine kontinuierliche Ionenquelle.

66. Massenspektrometer nach einem der Ansprüche 1-64, weiterhin umfassend eine gepulste Ionenquelle (10, 11).

67. Massenspektrometer nach einem vorhergehenden Anspruch, wobei eine Wechselstrompotentialwellenform an die Elektroden (2) angelegt wird und wo-

bei die Geschwindigkeit der Gleichstrompotential-wellenform progressiv langsamer wird.

**68.** Massenspektrometer nach Anspruch 67, wobei die Ionen in einem von der Ionenführung (1) emittierten Impuls von Ionen im Wesentlichen die gleiche Energie oder ähnliche Energien aufweisen.

**69.** Massenspektrometer nach Anspruch 67 oder 68, wobei die Ionen von mehreren, von der Ionenführung (1) emittierten Impulsen von Ionen im Wesentlichen die gleiche Energie oder ähnliche Energien aufweisen.

**70.** Massenspektrometer nach einem vorhergehenden Anspruch, weiterhin umfassend einen Massenanalysator (15) zur Massenanalyse der aus der Ionenführung (1) austretenden Ionen.

**71.** Massenspektrometer nach Anspruch 70, weiterhin umfassend ein Beschleunigungsgebiet zum Beschleunigen der aus der Ionenführung (1) austretenden Ionen durch eine konstante Spannungsdifferenz vor dem Eintritt in den Massenanalysator (15).

**72.** Massenspektrometer nach Anspruch 70 oder 71, wobei der Massenanalysator (15) einen Orthogonalbeschleunigungs-Flugzeit-Massenanalysator umfasst.

**73.** Massenspektrometer nach Anspruch 72, wobei der Orthogonalbeschleunigungs- Flugzeit- Massenanalysator (15) weiterhin eine Elektrode (14) umfasst, wobei die Elektrode bei Gebrauch nach einer Verzögerungszeit nach der Freisetzung von Ionen aus der Ionenführung bestromt wird.

**74.** Massenspektrometer nach Anspruch 73, wobei die Verzögerungszeit progressiv erhöht, gesenkt oder variiert wird.

**75.** Massenspektrometer nach Anspruch 74, wobei die Verzögerungszeit im Wesentlichen linear auf regelmäßige Weise oder gemäß einer vorbestimmten Weise erhöht oder gesenkt wird.

**76.** Verfahren zur Massenspektrometrie, umfassend:

Freisetzen einer ersten Gruppe von Ionen mit Masse-Ladungs-Verhältnissen in einem ersten Bereich aus einer für Masse-Ladungs-Verhältnis selektiven Ionenfalle; Empfangen mindestens einiger der Ionen der ersten Gruppe in einer Ionenführung (1), die mehrere Elektroden (2) umfasst; Bereitstellen eines ersten Einfanggebiets in der Ionenführung (1), so dass mindestens einige der Ionen der ersten Gruppe in dem ersten Einfanggebiet eingefangen werden; Freisetzen einer zweiten Gruppe von Ionen mit Masse-Ladungs-Verhältnissen in einem zweiten Bereich aus der für Masse-Ladungs-Verhältnis selektiven Ionenfalle; Empfangen mindestens einiger der Ionen der zweiten Gruppe in der Ionenführung (1); Bereitstellen eines zweiten, verschiedenen Einfanggebiets in der Ionenführung (1), so dass mindestens einige der Ionen der zweiten Gruppe in dem zweiten Einfanggebiet eingefangen werden; Parallelverschieben mindestens des ersten und zweiten Einfanggebiets entlang mindestens einem Abschnitt der Länge der Ionenführung (1), wobei eine oder mehrere instationäre Gleichspannungen oder eine oder mehrere instationäre Gleichspannungswellenformen progressiv an die Elektroden (2) angelegt werden, so dass das erste und zweite Einfanggebiet sich entlang der Ionenführung (1) bewegen.

**Revendications**

**1.** Spectromètre de masse comprenant :

un piège à ions sélectif en rapport masse sur charge qui, à l'usage, libère au moins un premier groupe d'ions ayant des rapports masse sur charge à l'intérieur d'une première gamme puis au moins un deuxième groupe d'ions ayant des rapports masse sur charge à l'intérieur d'une deuxième gamme ; un guide d'ions (1) comprenant une pluralité d'électrodes (2) disposées pour recevoir au moins certains ions dudit premier groupe d'ions et au moins certains ions dudit deuxième groupe d'ions ; un moyen disposé et adapté pour générer ou créer de multiples régions de piégeage sur au moins une partie de la longueur dudit guide d'ions, au moins certains des ions dudit premier groupe étant piégés à l'intérieur d'une première région de piégeage et au moins certains des ions dudit deuxième groupe étant piégés à l'intérieur d'une deuxième région de piégeage différente ; et un moyen disposé et adapté pour déplacer lesdites multiples régions de piégeage sur au moins une partie de la longueur dudit guide d'ions (1), une ou plusieurs tensions en CC transitoires ou une ou plusieurs formes d'onde de tension en CC transitoires étant progressivement appliquées audites électrodes (2) de telle sorte que lesdites multiples régions de piégeage se déplacent le long dudit guide d'ions (1).

**2.** Spectromètre de masse selon la revendication 1, dans lequel ledit piège à ions sélectif en rapport masse sur charge est choisi dans le groupe constitué par : (i) un piège à ions quadripolaire bidimensionnel (linéaire) ; (ii) un piège à ions quadripolaire tridimensionnel ; et (iii) un piège à ions de Penning.

**3.** Spectromètre de masse selon la revendication 1 ou 2, dans lequel au moins une majorité des ions piégés à l'intérieur de ladite première région de piégeage ont sensiblement le même rapport masse sur charge et/ou au moins une majorité des ions piégés à l'intérieur de ladite deuxième région de piégeage ont sensiblement le même rapport masse sur charge.

**4.** Spectromètre de masse selon la revendication 1, 2 ou 3, dans lequel au moins une majorité des ions piégés à l'intérieur de ladite première région de piégeage ont des rapports masse sur charge qui diffèrent de moins de x unités de rapport masse sur charge et/ou au moins une majorité des ions piégés à l'intérieur de ladite deuxième région de piégeage ont des rapports masse sur charge qui diffèrent de moins de x unités de rapport masse sur charge, x étant choisi dans le groupe constitué par : (i) 500 ; (ii) 450 ; (iii) 400 ; (iv) 350 ; (v) 300 ; (vi) 250 ; (vii) 200 ; (viii) 150 ; (ix) 100 ; (x) 90 ; (xi) 80 ; (xii) 70 ; (xiii) 60 ; (xiv) 50 ; (xv) 40 ; (xvi) 30 ; (xvii) 20 ; (xviii) 10 ; et (xix) 5.

**5.** Spectromètre de masse selon l'une quelconque des revendications précédentes, dans lequel au moins une majorité des ions piégés à l'intérieur de ladite première région de piégeage et/ou au moins une majorité des ions piégés à l'intérieur de ladite deuxième région de piégeage ont des rapports masse sur charge qui diffèrent de moins de : (i) 30 % ; (ii) 25 % ; (iii) 20 % ; (iv) 15 % ; (v) 10 % ; (vi) 5 % ; (vii) 4 % ; (viii) 3 % ; (ix) 2 % ; ou (x) 1 %.

**6.** Spectromètre de masse selon l'une quelconque des revendications précédentes, dans lequel un gradient axial de tension est maintenu sur au moins une partie de la longueur dudit guide d'ions (1) et dans lequel ledit gradient axial de tension varie avec le temps pendant que les ions sont transmis à travers ledit guide d'ions.

**7.** Spectromètre de masse selon l'une quelconque des revendications précédentes, dans lequel ledit guide d'ions (1) comprend une première électrode maintenue à un premier potentiel de référence, une deuxième électrode maintenue à un deuxième potentiel de référence, et une troisième électrode maintenue à un troisième potentiel de référence, dans lequel :

à un premier moment $t_1$, une première tension en CC est appliquée à ladite première électrode de telle sorte que ladite première électrode est maintenue à un premier potentiel supérieur ou inférieur audit premier potentiel de référence ; à un deuxième moment ultérieur $t_2$, une deuxième tension en CC est appliquée à ladite deuxième électrode de telle sorte que ladite deuxième électrode est maintenue à un deuxième potentiel supérieur ou inférieur audit deuxième potentiel de référence ; et à un troisième moment ultérieur $t_3$, une troisième tension en CC est appliquée à ladite troisième électrode de telle sorte que ladite troisième électrode est maintenue à un troisième potentiel supérieur ou inférieur audit troisième potentiel de référence.

**8.** Spectromètre de masse selon la revendication 7, dans lequel :

audit premier moment $t_1$, ladite deuxième électrode est audit deuxième potentiel de référence et ladite troisième électrode est audit troisième potentiel de référence ; audit deuxième moment $t_2$, ladite première électrode est audit premier potentiel et ladite troisième électrode est audit troisième potentiel de référence ; et audit troisième moment $t_3$, ladite première électrode est audit premier potentiel et ladite deuxième électrode est audit deuxième potentiel.

**9.** Spectromètre de masse selon la revendication 7, dans lequel :

audit premier moment $t_1$, ladite deuxième électrode est audit deuxième potentiel de référence et ladite troisième électrode est audit troisième potentiel de référence ; audit deuxième moment $t_2$, ladite première électrode n'est plus alimentée par ladite première tension en CC de telle sorte que ladite première électrode retourne audit premier potentiel de référence et ladite troisième électrode est audit troisième potentiel de référence ; et audit troisième moment $t_3$, ladite première électrode est audit premier potentiel de référence et ladite deuxième électrode n'est plus alimentée par ladite deuxième tension en CC de telle sorte que ladite deuxième électrode retourne audit deuxième potentiel de référence.

**10.** Spectromètre de masse selon la revendication 7, 8 ou 9, dans lequel lesdits premier, deuxième et troisième potentiels de référence sont sensiblement les mêmes.

**11.** Spectromètre de masse selon l'une quelconque des revendications 7 à 10, dans lequel lesdites première, deuxième et troisième tensions en CC sont sensiblement les mêmes.

12. Spectromètre de masse selon l'une quelconque des revendications 7 à 11, dans lequel lesdits premier, deuxième et troisième potentiels sont sensiblement les mêmes.

13. Spectromètre de masse selon l'une quelconque des revendications précédentes, dans lequel ledit guide d'ions (1) comprend 3, 4, 5, 6, 7, 8, 9, 10, 11, 12, 13, 14, 15, 16, 17, 18, 19, 20, 21, 22, 23, 24, 25, 26, 27, 28, 29, 30 ou > 30 segments, chaque segment comprenant 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 ou > 30 électrodes (2), et dans lequel les électrodes dans un segment sont maintenues sensiblement au même potentiel en CC.

14. Spectromètre de masse selon la revendication 13, dans lequel une pluralité de segments est maintenue sensiblement au même potentiel en CC.

15. Spectromètre de masse selon la revendication 13 ou 14, dans lequel chaque segment est maintenu sensiblement au même potentiel en CC que le $n^{\text{ième}}$ segment suivant, n valant 3, 4, 5, 6, 7, 8, 9, 10, 11, 12, 13, 14, 15, 16, 17, 18, 19, 20, 21, 22, 23, 24, 25, 26, 27, 28, 29, 30 ou > 30.

16. Spectromètre de masse selon l'une quelconque des revendications précédentes, dans lequel les ions sont confinés radialement à l'intérieur dudit guide d'ions (1) par un champ électrique en CA ou RF.

17. Spectromètre de masse selon l'une quelconque des revendications précédentes, dans lequel les ions sont confinés radialement à l'intérieur dudit guide d'ions (1) dans un puits de pseudo-potentiel et sont contraints axialement par une barrière ou un puits de potentiel réel.

18. Spectromètre de masse selon l'une quelconque des revendications précédentes, dans lequel le temps de transport des ions à travers ledit guide d'ions (1) est choisi dans le groupe constitué par : (i) inférieur ou égal à 20 ms ; (ii) inférieur ou égal à 10 ms ; (iii) inférieur ou égal à 5 ms ; (iv) inférieur ou égal à 1 ms ; et (v) inférieur ou égal à 0,5 ms.

19. Spectromètre de masse selon l'une quelconque des revendications précédentes, dans lequel ledit guide d'ions (1), à l'usage, est maintenu à une pression choisie dans le groupe constitué par : (i) supérieure ou égale à 0,0001 mbar ; (ii) supérieure ou égale à 0,0005 mbar ; (iii) supérieure ou égale à 0,001 mbar ; (iv) supérieure ou égale à 0,005 mbar ; (v) supérieure ou égale à 0,01 mbar ; (vi) supérieure ou égale à 0,05 mbar ; (vii) supérieure ou égale à 0,1 mbar ; (viii) supérieure ou égale à 0,5 mbar ; (ix) supérieure ou égale à 1 mbar ; (x) supérieure ou égale à 5 mbar ; et (xi) supérieure ou égale à 10 mbar.

20. Spectromètre de masse selon l'une quelconque des revendications précédentes, dans lequel ledit guide d'ions (1), à l'usage, est maintenu à une pression choisie dans le groupe constitué par : (i) inférieure ou égale à 10 mbar ; (ii) inférieure ou égale à 5 mbar ; (iii) inférieure ou égale à 1 mbar ; (iv) inférieure ou égale à 0,5 mbar ; (v) inférieure ou égale à 0,1 mbar ; (vi) inférieure ou égale à 0,05 mbar ; (vii) inférieure ou égale à 0,01 mbar ; (viii) inférieure ou égale à 0,005 mbar ; (ix) inférieure ou égale à 0,001 mbar ; (x) inférieure ou égale à 0,0005 mbar ; et (xi) inférieure ou égale à 0,0001 mbar.

21. Spectromètre de masse selon l'une quelconque des revendications précédentes, dans lequel ledit guide d'ions (1), à l'usage, est maintenu à une pression choisie dans le groupe constitué par : (i) entre 0,0001 et 10 mbar ; (ii) entre 0,0001 et 1 mbar ; (iii) entre 0,0001 et 0,1 mbar ; (iv) entre 0,0001 et 0,01 mbar ; (v) entre 0,0001 et 0,001 mbar ; (vi) entre 0,001 et 10 mbar ; (vii) entre 0,001 et 1 mbar ; (viii) entre 0,001 et 0,1 mbar ; (ix) entre 0,001 et 0,01 mbar ; (x) entre 0,01 et 10 mbar ; (xi) entre 0,01 et 1 mbar ; (xii) entre 0,01 et 0,1 mbar ; (xiii) entre 0,1 et 10 mbar ; (xiv) entre 0,1 et 1 mbar ; et (xv) entre 1 et 10 mbar.

22. Spectromètre de masse selon l'une quelconque des revendications précédentes, dans lequel ledit guide d'ions (1), à l'usage, est maintenu à une pression telle qu'une traînée visqueuse est imposée lors du passage des ions à travers ledit guide d'ions.

23. Spectromètre de masse selon l'une quelconque des revendications précédentes dans lequel, à l'usage, une ou plusieurs tensions en CC transitoires ou une ou plusieurs formes d'onde de tension en CC transitoires sont initialement appliquées à une première position axiale et sont ensuite appliquées à une deuxième puis une troisième position axiale différente le long dudit guide d'ions (1).

24. Spectromètre de masse selon l'une quelconque des revendications précédentes, dans lequel une ou plusieurs tensions en CC transitoires ou une ou plusieurs formes d'onde de tension en CC transitoires, à l'usage, se déplacent d'une extrémité dudit guide d'ions (1) à l'autre extrémité dudit guide d'ions de telle sorte que les ions sont poussés le long dudit guide d'ions.

25. Spectromètre de masse selon la revendication 23 ou 24, dans lequel lesdites une ou plusieurs tensions en CC transitoires créent : (i) une colline ou barrière de potentiel ; (ii) un puits de potentiel ; (iii) de multiples collines ou barrières de potentiel ; (iv) de multiples puits de potentiel ; (v) une combinaison d'une colline ou barrière de potentiel et d'un puits de potentiel ; ou (vi) une combinaison de multiples collines ou barrières de potentiel et de multiples puits de potentiel.

26. Spectromètre de masse selon la revendication 23 ou 24, dans lequel lesdites une ou plusieurs formes d'onde de tension en CC transitoires comprennent une forme d'onde répétitive.

27. Spectromètre de masse selon la revendication 26, dans lequel lesdites une ou plusieurs formes d'onde de tension en CC transitoires comprennent une onde carrée.

28. Spectromètre de masse selon l'une quelconque des revendications 23 à 27, dans lequel l'amplitude desdites une ou plusieurs tensions en CC transitoires ou desdites une ou plusieurs formes d'onde de tension en CC transitoires reste sensiblement constante avec le temps.

29. Spectromètre de masse selon l'une quelconque des revendications 23 à 27, dans lequel l'amplitude desdites une ou plusieurs tensions en CC transitoires ou desdites une ou plusieurs formes d'onde de tension en CC transitoires varie avec le temps.

30. Spectromètre de masse selon la revendication 29, dans lequel l'amplitude desdites une ou plusieurs tensions en CC transitoires ou desdites une ou plusieurs formes d'onde de tension en CC transitoires : (i) augmente avec le temps ; (ii) augmente puis diminue avec le temps ; (iii) diminue avec le temps ; ou (iv) diminue puis augmente avec le temps.

31. Spectromètre de masse selon l'une quelconque des revendications 23 à 30, dans lequel ledit guide d'ions (1) comprend une région d'entrée en amont, une région de sortie en aval et une région intermédiaire, dans lequel :

dans ladite région d'entrée, l'amplitude desdites une ou plusieurs tensions en CC transitoires ou desdites une ou plusieurs formes d'onde de tension en CC transitoires correspond à une première amplitude ;
dans ladite région intermédiaire, l'amplitude desdites une ou plusieurs tensions en CC transitoires ou desdites une ou plusieurs formes d'onde de tension en CC transitoires correspond à une deuxième amplitude ; et
dans ladite région de sortie, l'amplitude desdites une ou plusieurs tensions en CC transitoires ou desdites une ou plusieurs formes d'onde de tension en CC transitoires correspond à une troisième amplitude.

32. Spectromètre de masse selon la revendication 31, dans lequel la région d'entrée et/ou la région de sortie représentent une proportion de la longueur axiale totale dudit guide d'ions (1) choisie dans le groupe constitué par : (i) < 5 % ; (ii) 5-10 % ; (iii) 10-15 % ; (iv) 15-20 % ; (v) 20-25 % ; (vi) 25-30 % ; (vii) 30-35 % ; (viii) 35-40 % ; et (ix) 40-45 %.

33. Spectromètre de masse selon la revendication 31 ou 32, dans lequel ladite première et/ou ladite troisième amplitude sont sensiblement nulles et ladite deuxième amplitude est sensiblement non nulle.

34. Spectromètre de masse selon la revendication 31, 32 ou 33, dans lequel ladite deuxième amplitude est supérieure à ladite première amplitude et/ou ladite deuxième amplitude est supérieure à ladite troisième amplitude.

35. Spectromètre de masse selon l'une quelconque des revendications 23 à 34, dans lequel lesdites une ou plusieurs tensions en CC transitoires ou lesdites une ou plusieurs formes d'onde de tension en CC transitoires, à l'usage, se déplacent le long dudit guide d'ions (1) avec une première vitesse.

36. Spectromètre de masse selon la revendication 35, dans lequel ladite première vitesse : (i) reste sensiblement constante ; (ii) varie ; (iii) augmente ; (iv) augmente puis diminue ; (v) diminue ; (vi) diminue puis augmente ; (vii) diminue jusqu'à sensiblement zéro ; (viii) s'inverse ; ou (ix) diminue jusqu'à sensiblement zéro puis s'inverse.

37. Spectromètre de masse selon l'une quelconque des revendications 23 à 36, dans lequel lesdites une ou plusieurs tensions en CC transitoires ou lesdites une ou plusieurs formes d'onde de tension en CC transitoires amènent les ions à l'intérieur dudit guide d'ions (1) à se déplacer le long dudit guide d'ions avec une deuxième vitesse.

38. Spectromètre de masse selon la revendication 37, dans lequel la différence entre ladite première vitesse et ladite deuxième vitesse est inférieure ou égale à 100 m/s, 90 m/s, 80 m/s, 70 m/s, 60 m/s, 50 m/s, 40 m/s, 30 m/s, 20 m/s, 10 m/s, 5 m/s ou 1 m/s.

39. Spectromètre de masse selon l'une quelconque des revendications 35 à 38, dans lequel ladite première vitesse est choisie dans le groupe constitué par : (i) 10-250 m/s ; (ii) 250-500 m/s ; (iii) 500-750 m/s ; (iv) 750-1000 m/s ; (v) 1000-1250 m/s ; (vi) 1250-1500 m/s ; (vii) 1500-1750 m/s ; (viii) 1750-2000 m/s ; (ix) 2000-2250 m/s ; (x) 2250-2500 m/s ; (xi) 2500-2750 m/s ; et (xii) 2750-3000 m/s.

**40.** Spectromètre de masse selon la revendication 37, 38 ou 39, dans lequel ladite deuxième vitesse est choisie dans le groupe constitué par : (i) 10-250 m/s ; (ii) 250-500 m/s ; (iii) 500-750 m/s ; (iv) 750-1000 m/s ; (v) 1000-1250 m/s ; (vi) 1250-1500 m/s ; (vii) 1500-1750 m/s ; (viii) 1750-2000 m/s ; (ix) 2000-2250 m/s ; (x) 2250-2500 m/s ; (xi) 2500-2750 m/s ; et (xii) 2750-3000 m/s.

**41.** Spectromètre de masse selon la revendication 37, dans lequel ladite deuxième vitesse est sensiblement égale à ladite première vitesse.

**42.** Spectromètre de masse selon l'une quelconque des revendications 23 à 41, dans lequel lesdites une ou plusieurs tensions en CC transitoires ou lesdites une ou plusieurs formes d'onde de tension en CC transitoires ont une fréquence, et dans lequel ladite fréquence : (i) reste sensiblement constante ; (ii) varie ; (iii) augmente ; (iv) augmente puis diminue ; (v) diminue ; ou (vi) diminue puis augmente.

**43.** Spectromètre de masse selon l'une quelconque des revendications 23 à 42, dans lequel lesdites une ou plusieurs tensions en CC transitoires ou lesdites une ou plusieurs formes d'onde de tension en CC transitoires ont une longueur d'onde, et dans lequel ladite longueur d'onde : (i) reste sensiblement constante ; (ii) varie ; (iii) augmente ; (iv) augmente puis diminue ; (v) diminue ; ou (vi) diminue puis augmente.

**44.** Spectromètre de masse selon l'une quelconque des revendications 23 à 43, dans lequel au moins deux tensions en CC transitoires ou au moins deux formes d'onde de tension en CC transitoires sont disposées pour se déplacer : (i) dans la même direction ; (ii) dans des directions opposées ; (iii) l'une vers l'autre ; ou (iv) en s'éloignant l'une de l'autre.

**45.** Spectromètre de masse selon l'une quelconque des revendications 23 à 44, dans lequel lesdites une ou plusieurs tensions en CC transitoires ou lesdites une ou plusieurs formes d'onde de tension en CC transitoires, à l'usage, sont générées et déplacées le long dudit guide d'ions de façon répétée, et dans lequel la fréquence de génération desdites une ou plusieurs tensions en CC transitoires ou desdites une ou plusieurs formes d'onde de tension en CC transitoires : (i) reste sensiblement constante ; (ii) varie ; (iii) augmente ; (iv) augmente puis diminue ; (v) diminue ; ou (vi) diminue puis augmente.

**46.** Spectromètre de masse selon l'une quelconque des revendications 23 à 45, dans lequel lesdites une ou plusieurs tensions en CC transitoires ou lesdites une ou plusieurs formes d'onde de tension en CC transitoires ont une longueur d'onde qui reste sensiblement la même et une fréquence qui diminue avec le temps de telle sorte que la vitesse desdites une ou plusieurs tensions en CC transitoires ou desdites une ou plusieurs formes d'onde de tension en CC transitoires diminue avec le temps.

**47.** Spectromètre de masse selon l'une quelconque des revendications précédentes dans lequel, à l'usage, des impulsions d'ions (4) émanent d'une sortie dudit guide d'ions (1).

**48.** Spectromètre de masse selon la revendication 47, comprenant en outre un détecteur d'ions (17), ledit détecteur d'ions étant disposé pour, à l'usage, être sensiblement verrouillé en phase avec les impulsions d'ions émanant de la sortie du guide d'ions (1).

**49.** Spectromètre de masse selon la revendication 47 ou 48, comprenant en outre un analyseur de masse à temps de vol (15) comprenant une électrode (14) pour injecter les ions dans une région de dérive, ladite électrode étant disposée pour, à l'usage, être alimentée d'une manière sensiblement synchronisée avec les impulsions d'ions émanant de la sortie du guide d'ions (1).

**50.** Spectromètre de masse selon la revendication 47, 48 ou 49, comprenant en outre un piège à ions disposé en aval dudit guide d'ions, ledit piège à ions étant disposé pour stocker et/ou libérer les ions dudit piège à ions d'une manière sensiblement synchronisée avec les impulsions d'ions émanant de la sortie du guide d'ions (1) .

**51.** Spectromètre de masse selon l'une quelconque des revendications 47 à 50, comprenant en outre un filtre de masse disposé en aval dudit guide d'ions (1), dans lequel une fenêtre de transmission de rapport masse sur charge dudit filtre de masse est modifiée d'une manière sensiblement synchronisée avec les impulsions d'ions émanant de la sortie du guide d'ions.

**52.** Spectromètre de masse selon l'une quelconque des revendications précédentes, dans lequel ledit guide d'ions (1) est choisi dans le groupe constitué par : (i) un entonnoir à ions comprenant une pluralité d'électrodes avec des ouvertures à l'intérieur de celles-ci à travers lesquelles les ions sont transmis, le diamètre desdites ouvertures devenant progressivement plus petit ou plus grand ; (ii) un tunnel à ions comprenant une pluralité d'électrodes (2) avec des ouvertures à l'intérieur de celles-ci à travers lesquelles les ions sont transmis, le diamètre desdites ouvertures restant sensiblement constant ; et (iii) un empilement d'électrodes en plaques, en anneaux ou en boucles de fil.

53. Spectromètre de masse selon l'une quelconque des revendications précédentes, dans lequel ledit guide d'ions (1) comprend une pluralité d'électrodes (2), chaque électrode comportant une ouverture à travers laquelle, à l'usage, les ions sont transmis.

54. Spectromètre de masse selon l'une quelconque des revendications précédentes, dans lequel chaque électrode (2) comporte une ouverture sensiblement circulaire.

55. Spectromètre de masse selon l'une quelconque des revendications précédentes, dans lequel chaque électrode (2) comporte une seule ouverture à travers laquelle, à l'usage, les ions sont transmis.

56. Spectromètre de masse selon la revendication 53, 54 ou 55, dans lequel le diamètre des ouvertures d'au moins 50 %, 60 %, 70 %, 80 %, 90 % ou 95 % des électrodes (2) formant ledit guide d'ions (1) est choisi dans le groupe constitué par : (i) inférieur ou égal à 10 mm ; (ii) inférieur ou égal à 9 mm ; (iii) inférieur ou égal à 8 mm ; (iv) inférieur ou égal à 7 mm ; (v) inférieur ou égal à 6 mm ; (vi) inférieur ou égal à 5 mm ; (vii) inférieur ou égal à 4 mm ; (viii) inférieur ou égal à 3 mm ; (ix) inférieur ou égal à 2 mm ; et (x) inférieur ou égal à 1 mm.

57. Spectromètre de masse selon l'une quelconque des revendications précédentes, dans lequel au moins 50 %, 60 %, 70 %, 80 %, 90 % ou 95 % des électrodes (2) formant le guide d'ions (1) comportent des ouvertures qui sont sensiblement de la même taille ou surface.

58. Spectromètre de masse selon l'une quelconque des revendications 1 à 51, dans lequel ledit guide d'ions (1) comprend un ensemble de tiges segmentées.

59. Spectromètre de masse selon l'une quelconque des revendications précédentes, dans lequel ledit guide d'ions (1) se compose de : (i) 10-20 électrodes ; (ii) 20-30 électrodes ; (iii) 30-40 électrodes ; (iv) 40-50 électrodes ; (v) 50-60 électrodes ; (vi) 60-70 électrodes ; (vii) 70-80 électrodes ; (viii) 80-90 électrodes ; (ix) 90-100 électrodes ; (x) 100-110 électrodes ; (xi) 110-120 électrodes ; (xii) 120-130 électrodes ; (xiii) 130-140 électrodes ; (xiv) 140-150 électrodes ; ou (xv) plus de 150 électrodes.

60. Spectromètre de masse selon l'une quelconque des revendications précédentes, dans lequel l'épaisseur d'au moins 50 %, 60 %, 70 %, 80 %, 90 % ou 95 % desdites électrodes (2) est choisie dans le groupe constitué par : (i) inférieure ou égale à 3,0 mm ; (ii) inférieure ou égale à 2,5 mm ; (iii) inférieure ou égale à 2,0 mm ; (iv) inférieure ou égale à 1,5 mm ; (v) inférieure ou égale à 1,0 mm ; et (vi) inférieure ou égale à 0,5 mm.

61. Spectromètre de masse selon l'une quelconque des revendications précédentes, dans lequel ledit guide d'ions (1) a une longueur choisie dans le groupe constitué par : (i) inférieure à 5 cm ; (ii) 5-10 cm ; (iii) 10-15 cm ; (iv) 15-20 cm ; (v) 20-25 cm ; (vi) 25-30 cm ; et (vii) supérieure à 30 cm.

62. Spectromètre de masse selon l'une quelconque des revendications précédentes, dans lequel au moins 10 %, 20 %, 30 %, 40 %, 50 %, 60 %, 70 %, 80 %, 90 % ou 95 % desdites électrodes (2) sont reliées à la fois à une source de tension à CC et à une source de tension à CA ou RF.

63. Spectromètre de masse selon l'une quelconque des revendications précédentes, dans lequel les électrodes (2) axialement adjacentes sont alimentées avec des tensions en CA ou RF présentant une différence de phase de 180°.

64. Spectromètre de masse selon l'une quelconque des revendications précédentes, comprenant en outre une source d'ions choisie dans le groupe constitué par : (i) une source d'ions à électronébulisation (« ESI ») ; (ii) une source d'ions à ionisation chimique à pression atmosphérique (« APCI ») ; (iii) une source d'ions à photo-ionisation à pression atmosphérique (« APPI ») ; (iv) une source d'ions à ionisation par désorption laser assistée par matrice (« MALDI ») ; (v) une source d'ions à ionisation par désorption laser (« LDI ») ; (vi) une source d'ions à plasma inductif (« ICP ») ; (vii) une source d'ions à impact d'électrons (« EI ») ; (viii) une source d'ions à ionisation chimique (« CI ») ; (ix) une source d'ions à bombardement d'atomes rapides (« FAB ») ; et (x) une source d'ions pour spectrométrie de masse à ions secondaires avec cible liquide (« LSIMS »).

65. Spectromètre de masse selon l'une quelconque des revendications 1 à 64, comprenant en outre une source d'ions continue.

66. Spectromètre de masse selon l'une quelconque des revendications 1 à 64, comprenant en outre une source d'ions pulsée (10, 11).

67. Spectromètre de masse selon l'une quelconque des revendications précédentes, dans lequel une forme d'onde de potentiel en CC est appliquée auxdites électrodes (2) et dans lequel la vitesse de ladite forme d'onde de potentiel en CC devient progressivement plus lente.

**68.** Spectromètre de masse selon la revendication 67, dans lequel les ions dans une impulsion d'ions émise depuis le guide d'ions (1) ont sensiblement la même énergie ou des énergies similaires.

**69.** Spectromètre de masse selon la revendication 67 ou 68, dans lequel les ions d'une pluralité d'impulsions d'ions émises depuis le guide d'ions (1) ont sensiblement la même énergie ou des énergies similaires.

**70.** Spectromètre de masse selon l'une quelconque des revendications précédentes, comprenant en outre un analyseur de masse (15) pour analyser la masse des ions sortant du guide d'ions (1).

**71.** Spectromètre de masse selon la revendication 70, comprenant en outre une région d'accélération pour accélérer les ions sortant du guide d'ions (1) par une différence de tension constante avant qu'ils ne pénètrent dans ledit analyseur de masse (15).

**72.** Spectromètre de masse selon la revendication 70 ou 71, dans lequel ledit analyseur de masse (15) comprend un analyseur de masse à temps de vol à accélération orthogonale.

**73.** Spectromètre de masse selon la revendication 72, dans lequel ledit analyseur de masse à temps de vol à accélération orthogonale (15) comprend en outre une électrode (14), ladite électrode, à l'usage, étant alimentée après un délai d'attente après que les ions ont été libérés dudit guide d'ions.

**74.** Spectromètre de masse selon la revendication 73, dans lequel ledit délai d'attente est progressivement augmenté, diminué ou modifié.

**75.** Spectromètre de masse selon la revendication 74, dans lequel ledit délai d'attente est augmenté ou diminué de façon sensiblement linéaire, d'une manière régulière ou d'une manière prédéterminée.

**76.** Procédé de spectrométrie de masse comprenant :

la libération d'un premier groupe d'ions ayant des rapports masse sur charge à l'intérieur d'une première gamme d'un piège à ions sélectif en rapport masse sur charge ;
la réception d'au moins certains des ions dudit premier groupe dans un guide d'ions (1) comprenant une pluralité d'électrodes (2) ;
la mise en place d'une première région de piégeage à l'intérieur dudit guide d'ions (1) de telle sorte qu'au moins certains des ions dudit premier groupe soient piégés à l'intérieur de ladite première région de piégeage ;
la libération d'un deuxième groupe d'ions ayant des rapports masse sur charge à l'intérieur d'une deuxième gamme dudit piège à ions sélectif en rapport masse sur charge ;
la réception d'au moins certains des ions dudit deuxième groupe dans ledit guide d'ions (1) ;
la mise en place d'une deuxième région de piégeage différente à l'intérieur dudit guide d'ions (1) de telle sorte qu'au moins certains des ions dudit deuxième groupe soient piégés à l'intérieur de ladite deuxième région de piégeage ; et
le déplacement au moins desdites première et deuxième régions de piégeage sur au moins une partie de la longueur dudit guide d'ions (1), une ou plusieurs tensions en CC transitoires ou une ou plusieurs formes d'onde de tension en CC transitoires étant progressivement appliquées auxdites électrodes (2) de telle sorte que lesdites première et deuxième régions de piégeage se déplacent le long dudit guide d'ions (1).

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5206506 A

**Non-patent literature cited in the description**

- *J. Am. Soc. Mass Spectrom.,* 1998, vol. 9, 569-579